# EUROPÄISCHE PATENTSCHRIFT

(11) **EP 2 639 790 B1**
(45) Veröffentlichungstag und Bekanntmachung des Hinweises auf die Patenterteilung: **11.03.2015**
(21) Anmeldenummer: 13405036.8
(22) Anmeldetag: 14.03.2013
(51) Int. Cl.: G10K 11/00, G01S 7/52, G01S 15/00

(54) **Fahrerloses Fahrzeug mit mindestens einem Ultraschallsensor sowie Verfahren für dessen Betrieb**
Driverless vehicle with at least one ultrasound sensor and method for operating the same
Véhicule sans conducteur comprenant au moins un capteur à ultrasons et procédé de fonctionnement de celui-ci

(30) Priorität: 15.03.2012 EP 12405029
(43) Veröffentlichungstag der Anmeldung: 18.09.2013
(73) Patentinhaber: MT Robot AG, 4222 Zwingen (CH)
(72) Erfinder: Drost, Andreas, 4125 Riehen (CH); Kostal, Peer, 79618 Rheinfelden (DE)
(74) Vertreter: Stäbler, Roman

(56) Entgegenhaltungen:
- DE-A1-102005 013 589
- DE-A1-102008 001 746
- DE-A1-102009 003 049
- US-A1- 2011 046 813

## Beschreibung

### Technisches Gebiet

Die Erfindung betrifft ein fahrerloses Fahrzeug mit mindestens einem Ultraschallsensor sowie ein Verfahren für den Betrieb eines fahrerlosen Fahrzeugs.

### Stand der Technik

Ultraschallsensoren werden heutzutage sehr häufig in der Objekterkennung eingesetzt. Gegenüber anderen Sensortypen haben Ultraschallsensoren den Vorteil, dass sie mit Schall messen, wodurch z. B. unterschiedliche Oberflächenbeschaffenheiten von zu erkennenden Objekten wie Rauheit oder Farbe keinen Einfluss auf die Objekterkennung haben. Ausserdem können Ultraschallsensoren einen grösseren Raum auf einmal überwachen, als die meisten optischen Sensoren.

Fahrerlose Fahrzeuge werden vor allem im Logistikbereich im Rahmen von fahrerlosen Transportsystemen zunehmend häufig eingesetzt, wobei derartige Fahrzeuge selbstständig und ohne Eingriff eines Fahrers oder sonst einer Person den Transport von Waren innerhalb eines Gebäudes oder Gebäudebereichs erledigen. Ferner können fahrerlose Fahrzeuge auch für die Überwachung oder für die Reinigung eines Gebäudes oder eines Gebäudebereichs eingesetzt werden. In der Regel verwenden derartige Fahrzeuge Sensoren, wie zum Beispiel Ultraschallsensoren um drohende Kollisionen mit Objekten oder Personen frühzeitig zu erkennen.

Bei typischen Ultraschallsensoren dient ein Ultraschallwandler gleichzeitig als Sender und als Empfänger. Ein entsprechender Ultraschallsensor ist beispielsweise in der DE 42 18 041 C2 gezeigt. Zuerst sendet dieser Ultraschallwandler einen Ultraschallimpuls oder ein Ultraschallimpulspaket. Anschliessend misst der gleiche Ultraschallwandler das empfangene Echo-Signal. Problematisch ist dabei, dass der Ultraschallwandler lange nachschwingt und dass während der Nachschwingzeit eine Detektion des Echo-Signals unmöglich ist, da das Echo-Signal typischerweise kleiner ist als die Nachschwingung. Durch diese Detektions-Totzeit während des Nachschwingens ergibt sich beispielsweise bei einer Signalfrequenz des Ultraschallwandlers von 40 kHz ein minimaler Detektionsabstand von etwa 20 cm und bei einer Signalfrequenz des Ultraschallwandlers von 200 kHz ein minimaler Detektionsabstand von etwa 1 cm. Ein minimaler Detektionsabstand von 1 cm mag zwar auf den ersten Blick akzeptabel scheinen; hierbei gilt es jedoch zu beachten, dass die Dämpfung des Schalls im Raum umso stärker ist, je höher die Ultraschallfrequenz ist. Folglich sinkt mit steigender Ultraschallfrequenz zwar der minimale Detektionsabstand, jedoch verringert sich gleichzeitig auch die Grösse des überwachbaren Raums.

Soll - um einen entsprechend grossen Überwachungsraum zu erfassen - mit kleinerer Frequenz von zum Beispiel 40 kHz gemessen und gleichzeitig der minimale Detektionsabstand so klein wie möglich gehalten werden, so kommen typischerweise zwei Ultraschallwandler zum Einsatz, von welchen einer als Sender-Wandler und einer als Empfänger-Wandler arbeitet. Eine solche 2-Wandler-Lösung hat jedoch den Nachteil, dass keine zuverlässige Funktionsüberprüfung des Ultraschallsensors möglich ist. Das Nachschwingen des Sender-Wandlers kann zwar dazu verwendet werden, dessen Funktion zu überwachen. Jedoch ist es nicht möglich, sicherzustellen, dass der Empfänger-Wandler ordnungsgemäss funktioniert und insbesondere ein Signal detektieren würde, wenn sich ein Objekt vor der Sender-Empfänger Anordnung befände.

Das Problem der fehlenden Möglichkeit zur Funktionsüberprüfung kann dadurch gelöst werden, dass insgesamt drei Ultraschallwandler verwendet werden. Hierbei ist neben dem Sender-Wandler und dem Empfänger-Wandler ein Überwachungs-Wandler vorgesehen. Dieser Überwachungs-Wandler überwacht den Sender-Wandler und kann das Signal des Empfänger-Wandlers mithören. Der Aufbau eines solchen 3-Wandler-Ultraschall-Sensors ist jedoch recht aufwendig, da die drei Ultraschallwandler in einem speziellen Gehäuse in einem bestimmten Winkel zueinander angeordnet werden müssen. Damit ist insbesondere auch die Möglichkeit, den Wandler an einem beliebigen Ort einzubauen, beschränkt.

Die US 2009/207006 A1 offenbart ein Verfahren zur Funktionsüberprüfung eines Ultraschallsensors und eine entsprechende Sensoranordnung. Insbesondere zeigt dieses Dokument zwei Ultraschallwandler, welche von einer Autostossstange getragen werden. Einer dieser Ultraschallwandler arbeitet als Empfänger, der andere als Sender. Zur gegenseitigen Funktionsüberprüfung der Ultraschallwandler kann ein über die Autostossstange übertragenes Ultraschallsignal genutzt werden. So wird eine Funktionsüberprüfung der Ultraschallwandler ohne einen dritten Ultraschallwandler ermöglicht. Eine Anwendung dieses Verfahrens in kompakten Ultraschallsensoren ist jedoch problematisch, da bei eng beieinander liegenden Ultraschallwandlern eine einwandfreie Funktion durch Überlagerungen von Echosignalen und Funktionsüberprüfungssignalen am Empfänger zu befürchten stünde. Somit lässt sich das in der US 2009/207006 A1 beschriebene Verfahren nicht ohne weiteres in kompakten Ultraschallsensoren anwenden, bei denen zwei Ultraschallwandler räumlich sehr nah beieinander liegen.

DE 10 2008 001 746 A1 (Denso Corp.) offenbart einen Ultraschallsensor und ein Selbstdiagnoseverfahren für einen Ultraschallsensor. Beim Selbstdiagnoseverfahren wird durch eine erste Empfangsvorrichtung, welche auch zum Senden von Ultraschallwellen geeignet ist, eine Ultraschallwelle ausgesendet, welche durch ein Schallverringerungselement zu einer zweiten Empfangsvorrichtung gelangt und durch diese erfasst wird. Aufgrund des Erfassungssignals lässt sich eine allfällige Fehlfunktion der zweiten Empfangsvorrichtung ermitteln. Zur Abstandsmessung wird entweder eine Ultraschallwelle von einer separaten Sendevorrichtung oder von der ersten Empfangsvorrichtung ausgesendet. Die Empfangssignale der piezoelektrischen Elemente werden über eine Schaltungsvorrichtung an die ECU eines Fahrzeugs gesendet und von dieser ausgewertet. Beim Selbstdiagnoseverfahren wird eine von der Empfangsvorrichtung ausgesendete Ultraschallwelle über das Vibrations-Verringerungselement zu weiteren Empfangsvorrichtungen geleitet, wobei die Empfangszeiten sowie die Empfangsintensitäten mit Sollwerten verglichen werden um eine Fehlfunktion des Sensors zu ermitteln.

Die US 2011/0046813 A1 (Castaneda et al.) beschreibt ein Fahrzeug für den Materialtransport, welches über ein automatisches Steuerungssystem verfügt. Das Fahrzeug umfasst eine Empfangsantenne, mit deren Hilfe das Fahrzeug über eine Fernsteuerung gesteuert werden kann. Ferner sind diverse Entfernungssensoren am Fahrzeug angebracht. Die Entfernungssensoren können mehrere Zonen überwachen, wobei die Detektion eines Objektes je nach Zone eine spezifische Handlung des Fahrzeugs auslöst.

### Darstellung der Erfindung

Aufgabe der Erfindung ist es, ein dem eingangs genannten technischen Gebiet zugehörendes fahrerloses Fahrzeug zu schaffen, welches über mindestens einen Ultraschallsensor verfügt, der eine zuverlässige Funktionsüberprüfung aufweist und eine zuverlässige Detektion von Objekten, insbesondere von sehr nahen Objekten ermöglicht.

Die Lösung der Aufgabe ist durch die Merkmale des Anspruchs 1 definiert. Gemäss der Erfindung verfügt das fahrerlose Fahrzeug über eine Steuerungseinheit und mindestens einen Ultraschallsensor zum Erfassen von Objekten im Umkreis des Fahrzeugs, insbesondere in Fahrtrichtung. Der Ultraschallsensor umfasst eine Auswerteeinheit sowie zwei über eine Akustiksubstanz akustisch verbundene Ultraschallwandler. Die Ultraschallwandler sind derart ausgestaltet, dass von einem der beiden Ultraschallwandler Ultraschallsignale aussendbar und vom anderen Ultraschallwandler empfangbar sind, wobei ein vom ersten Ultraschallwandler durch die Akustiksubstanz zum zweiten Ultraschallwandler übermittelter Anteil der Ultraschallsignale durch die Akustiksubstanz verändert wird. Die Auswerteeinheit ist derart ausgestaltet, dass diese die veränderten Anteile der Ultraschallsignale als Prüfsignal identifizieren kann. Ferner ist die Auswerteeinheit derart ausgestaltet, dass mindestens ein Parameter des veränderten Anteils eines Ultraschallsignals durch die Auswerteeinheit ermittelt wird und in Abhängigkeit dieses Parameters ein Steuerungssignal an die Steuerungseinheit übertragen wird.

Die Ausgestaltung des mindestens einen Ultraschallsensors ermöglicht eine dauerhafte Funktionsprüfung desselben, wobei beispielsweise bei einer entdeckten Fehlfunktion das Fahrzeug durch Übertragung eines Stoppsignals von der Auswerteeinheit an die Steuerungseinheit des Fahrzeugs das Fahrzeug angehalten werden kann. Alternativ kann durch das entsprechende Signal der Steuerungseinheit auch angezeigt werden, dass die durch den Sensor ermittelten Daten wegen einer Fehlfunktion nicht mehr verwendet werden dürfen. Dies verhindert, dass ein Fahrzeug wegen eines defekten oder nicht mehr korrekt arbeitenden Ultraschallsensors eine Kollision mit einem Objekt oder einer Person verursacht.

Die Verwendung von zwei separaten Wandlern für das Aussenden und das Empfangen von Ultraschallsignalen ermöglicht es, selbst bei Verwendung einer tiefen Frequenz relativ nahe Objekte zuverlässig zu detektieren, da der Empfang der am Objekt reflektierten Ultraschallsignale selbst während des Nachklingens des aussendenden Ultraschallwandlers durch den von diesem getrennten, zweiten Ultraschallwandler empfangen werden können.

Als "fahrerloses Fahrzeug" im Sinne der vorliegenden Anmeldung wird ein Fahrzeug verstanden, welches autonom eine vorgegebene Strecke abfahren kann, d.h. das fahrerlose Fahrzeug steuert sich selbstständig und kann allfällige Hindernisse umfahren. Dabei kann die Streckenführung vorgegeben sein oder lediglich der Start- und Zielpunkt, wobei im letzteren Fall eine Steuerungseinheit des Fahrzeugs eine geeignete Streckenführung zwischen den beiden Punkten berechnet. Alternativ kann es sich auch um ein Fahrzeug handeln, welches einem auf dem Boden vorgezeichnete Strecke abfährt, wobei die Strecke zum Beispiel mit Farbmarkierungen oder dergleichen vorgezeichnet ist.

Insbesondere betrifft die vorliegende Erfindung fahrerlose Fahrzeuge, die Teil eines fahrerlosen Transportsystems sind und die innerhalb eines Gebäudes oder Gebäudeteiles eingesetzt werden. Derartige Fahrzeuge können beispielsweise zum Transport von Waren, zur Reinigung oder zur Überwachung eingesetzt werden. Die Fahrzeuge können für einen spezifischen Einsatzzweck konstruiert sein oder alternativ über eine Aufnahme für modulare Aufbauten verfügen, mit denen dasselbe Fahrzeug für verschiedene Einsatzzwecke ausgerüstet werden kann.

Insbesondere handelt es sich bei den erfindungsgemässen Fahrzeugen um elektrisch betriebene Fahrzeuge, welche mit mindestens einer Batterie ausgestattet sind. Bevorzugt sind die Fahrzeuge derart ausgestaltet, dass diese bei einer schwachen Batterieladung selbstständig eine Ladestation anfahren und an dieser Andocken. Alternativ kann ein erfindungsgemässes Fahrzeug auch über einen Verbrennungsmotor oder über eine alternative Energieversorgung, wie zum Beispiel eine Brennstoffzelle oder über Solarzellen verfügen.

Das fahrerlose Fahrzeug gemäss der vorliegenden Erfindung verfügt über eine Steuerungseinheit, welche das Fahrzeug anhand von gespeicherten Daten sowie von dynamischen Daten, die durch den mindestens einen Ultraschallsensor sowie allfälliger weiterer Sensoren von der Umgebung des Fahrzeugs gewonnen werden, steuert. Die Steuerungseinheit umfasst vorzugsweise mindestens einen Mikrochip zur Verarbeitung von Daten sowie eine Speichereinheit zur Speicherung von Daten.

Insbesondere berechnet die Steuerungseinheit bei Erfassung eines Objekts durch den mindestens einen Ultraschallsensor anhand der durch den mindestens einen Sensor übermittelten Daten eine Ausweichroute oder stoppt das Fahrzeug, um eine Kollision mit dem Objekt zu vermeiden. Die Steuerungseinheit kann ferner bevorzugt über eine drahtlose Verbindung zusätzliche Steuerungs- oder Positionsdaten erhalten. Zum Beispiel können über eine Funkverbindung oder über ein drahtloses Datennetzwerk, wie beispielsweise einem W-LAN oder einem GSM Netzwerk Daten zur nächsten anzufahrenden Position oder zum nächsten Auftrag an das Fahrzeug übermittelt werden. Weiter bevorzugt können über die Funkverbindung auch Daten vom Fahrzeug auf ein externes Datennetzwerk gesendet werden, z. B. die aktuelle Position des Fahrzeugs oder den Abarbeitungsstatus des Arbeitsauftrags.

Zudem können auch drahtlose Positionsdaten über externe Markierungen, wie zum Beispiel Funksender, Magneten, Induktionsschleifen, Reflektoren oder RFID Chips auf die Steuerungseinheit des Fahrzeugs übertragen werden. Auch ist es denkbar, dass das Fahrzeug über einen Empfänger für ein Satellitenpositionssystem, wie z.B. GPS, Galileo oder Glonass verfügt, um weitere Positionsdaten zu erhalten, insbesondere wenn das Fahrzeug auch ausserhalb eines Gebäudes eingesetzt wird.

Der mindestens eine Ultraschallsensor detektiert ein Objekt mit dem einem Fachmann bekannten Prinzip der Reflexion eines Ultraschallsignals an der Oberfläche des Objekts, wobei anhand der Zeitdifferenz zwischen ausgesendetem Ultraschallsignal und der empfangenen Reflexion unter Berücksichtigung der Schallgeschwindigkeit die Distanz zum Objekt berechnet werden kann.

Der Ultraschallsensor umfasst eine die beiden Ultraschallwandler akustisch miteinander verbindende Akustiksubstanz, welche vorzugsweise fest oder flüssig ist. Es ist jedoch auch denkbar, dass die Akustiksubstanz gasförmig ist. Die Akustiksubstanz dämpft insbesondere bevorzugt das Ultraschallsignal. Alternativ sind jedoch auch andere Veränderungen des durch die Akustiksubstanz veränderten Anteils des Ultraschallsignals denkbar, z.B. eine Phasenverschiebung.

Bei vorteilhaften Ausführungsformen umfasst die Akustiksubstanz einen Kunststoff und/oder einen Naturstoff. Besonders vorteilhaft ist es, wenn der Kunststoff ein Elastomer umfasst und/oder ein Elastomer ist. Besonders gut geeignete Kunststoffe sind Silikone und/oder Polyurethane, es können jedoch auch andere elastomere Kunststoffe oder auch sonstige Kunststoffe zum Einsatz kommen. Besonders geeignet sind Kunststoffe mit einer spezifischen Schallgeschwindigkeit zwischen 50 m/s und 3000 m/s, bevorzugt zwischen 250 m/s und 2500 m/s, besonders bevorzugt zwischen 500 m/s und 2000 m/s. Besonders geeignet sind Kunststoffe mit einer Dichte zwischen 500 kg/m³ und 2000 kg/m³, bevorzugt zwischen 750 kg/m³ und 1500 kg/m³, besonders bevorzugt zwischen 1000 kg/m³ und 1250 kg/m³. Besonders geeignet sind Kunststoffe mit einer Shore-A-Härte zwischen 15 und 120, bevorzugt zwischen 20 und 110, besonders bevorzugt zwischen 25 und 100.

Besonders vorteilhaft ist es, wenn die Akustiksubstanz ein 2-Teil-Silikon umfasst. Bei typischen Ausführungsformen umfasst die Akustiksubstanz einen Schaumstoff und/oder einen Naturstoff wie z. B. Kork. Bei besonders vorteilhaften Ausführungsformen umfasst die Akustiksubstanz Zellkautschuk. Experimente haben gezeigt, dass die Verwendung von Zellkautschuk als Akustiksubstanz gegenüber der Verwendung von Silikon oder Polyurethan als Akustiksubstanz den zusätzlichen Vorteil hat, dass Zellkautschuk federnde Eigenschaften hat. Unter "federnden Eigenschaften" ist hier zu verstehen, dass ein Material unter Druck nachgibt und bei nachlassendem Druck in seine ursprüngliche Form zurückkehrt. Die federnden Eigenschaften von Zellkautschuk können auf vorteilhafte Weise dazu genutzt werden, die Ultraschallwandler fest und sicher in der Akustiksubstanz zu fixieren. Dazu wird eine Wandler-Ausnehmung typischerweise derart dimensioniert, dass sie kleiner ist als der von ihr aufzunehmende Wandler. Beim Einbau des Wandlers kann die Wandler-Ausnehmung aufgrund der federnden Eigenschaften des Zellkautschuks mechanisch aufgeweitet werden. Sobald der Wandler in die Wandler-Ausnehmung eingesetzt ist, führen dann eben diese federnden Eigenschaften dazu, dass der Wandler fest und sicher von der Akustiksubstanz umschlossen wird.

Alternativ zu Zellkautschuk ist mit Vorteil auch eine Verwendung von Moosgummi oder einem Werkstoff mit vergleichbaren mechanischen und/oder chemischen Eigenschaften möglich. Besonders vorteilhaft ist es, wenn der Zellkautschuk auf Basis von Ethylen-Propylen-Dien-Monomer (EPDM) hergestellt ist. Bei vorteilhaften Ausführungsformen hat der Zellkautschuk und/oder der Moosgummi eine Shore-00-Härte zwischen 20 und 70, vorzugsweise zwischen 25 und 65, bevorzugt zwischen 30 und 60, besonders bevorzugt zwischen 35 und 55. Versuche haben gezeigt, dass vor allem Zellkautschuk und/oder Moosgummi mit einer Shore-00-Härte von ungefähr 40 besonders vorteilhaft ist. Die Dichte des Zellkautschuks und/oder des Moosgummis liegt vorzugsweise zwischen 80 kg/m³ und 200 kg/m³, vorzugsweise zwischen 110 kg/m³ und 170 kg/m³ bevorzugt zwischen 130 kg/m³ und 150 kg/m³. Besonders vorteilhaft ist es, wenn der Zellkautschuk und/oder der Moosgummi eine Dichte von ungefähr 140 kg/m³ hat.

Entscheidend bei der Auswahl des Materials der Akustiksubstanz ist, dass das Material Dämpfungs- und Schallleitungseigenschaften aufweist, die es ermöglichen, ein akustisches Signal derart von dem Sender-Wandler zu dem Empfänger-Wandler zu leiten, dass es einerseits, insbesondere was seine Amplitude angeht, kleiner ist als Echo-Signale von zu detektierenden Objekten und andererseits aber noch gross genug ist, um vom Empfänger-Wandler zuverlässig detektiert zu werden. Die Verwendung eines solchen Kunststoffs und/oder Naturstoffs zumindest als Teil der Akustiksubstanz hat den Vorteil, dass eine besonders vorteilhafte Dämpfung eines Ultraschallsignals ermöglicht wird und dass insbesondere sehr kleine minimale Detektionsabstände und sehr kleine Abmessungen des erfindungsgemässen Ultraschallsensors ermöglicht werden. Es ist jedoch prinzipiell auch denkbar, eine Metallverbindung oder ein Gas und/oder einen keramischen Werkstoff zumindest als Teil der Akustiksubstanz zu verwenden.

Die Auswerteeinheit ist derart ausgestaltet, dass diese aufgrund der spezifischen Veränderung des Ultraschallsignals durch die Akustiksubstanz diese Anteile eindeutig identifizieren kann, z. B. anhand der Signaldämpfung, einer Frequenzveränderung, einer Phasenverschiebung oder dergleichen. Anschliessend wird mindestens ein Parameter eines veränderten Anteils eines Ultraschallsignals ermittelt, insbesondere bevorzugt die gemessene Amplitude des veränderten Anteils. Alternativ kann jedoch auch ein anderer Parameter ermittelt werden, wie zum Beispiel eine Phasenverschiebung oder eine Frequenzveränderung. In Abhängigkeit dieses Parameters wird durch die Auswerteeinheit anschliessend ein Steuerungssignal an die Steuerungseinheit übermittelt. Dieses Steuerungssignal kann beispielsweise dazu führen, dass das fahrerlose Fahrzeug stoppt oder die Daten des entsprechenden Ultraschallsensors durch die Steuerungseinheit nicht mehr verwendet werden.

Beispielsweise vergleicht die Auswerteeinheit den ermittelten Parameter mit einem Referenzwert. Unter- oder überschreitet dieser Parameter den Referenzwert, so kann eine Fehlfunktion des Ultraschallsensors angenommen werden. Es ist auch denkbar, dass die Auswerteeinheit nicht nur einen Parameter des veränderten Anteils ermittelt, sondern mehrere Parameter. Dabei wird dann in Abhängigkeit dieser mehreren Parameter ein Steuerungssignal an die Steuerungseinheit übermittelt. Auch ist es denkbar, dass Parameter von einigen aufeinanderfolgenden Ultraschallsignalen aufaddiert oder deren Mittelwert berechnet wird und die Auswerteeinheit in Abhängigkeit dieser aufaddierten Werte oder des Mittelwerts ein Steuerungssignal an die Steuerungseinheit überträgt. Alternativ kann die Auswerteeinheit auch anhand einer geeigneten mathematischen Funktion und des ermittelten Parameters berechnen, ob ein Steuerungssignal an die Steuerungseinheit gesendet werden soll.

Bevorzugt verfügt die Auswerteeinheit über einen ersten Mikrocontroller und einen zweiten Mikrocontroller. Der erste Mikrocontroller erzeugt anhand der durch einen der zwei Ultraschallwandler empfangenen Ultraschallsignale ein Steuerungssignal für die Steuerungseinheit des Fahrzeugs. Der zweite Mikrocontroller ist ferner derart ausgestaltet, dass dieser die korrekte Funktion des ersten Mikrocontrollers anhand des erzeugten Steuerungssignals überwacht.

Das Steuerungssignal kann zum Beispiel ein Datensignal mit mindestens einer berechneten Entfernung zu einem Objekt umfassen. Alternativ kann das Steuerungssignal auch nur ein Signal umfassen, welches der Steuerungseinheit signalisiert, dass sich kein Objekt innerhalb einer vorbestimmten Entfernung zum Ultraschallsensor befindet sowie ein Signal, welches das Vorhandensein eines Objekts innerhalb der vordefinierten Entfernung signalisiert.

Durch die Überwachung des ersten Mikrocontrollers durch den zweiten Mikrocontroller kann sichergestellt werden, dass ein Ausfall oder eine Fehlfunktion des ersten Mikrocontrollers zuverlässig registriert wird, worauf das Fahrzeug zum Beispiel anhalten kann. Alternativ kann die Funktionskontrolle des ersten Mikrocontrollers auch durch die Steuerungseinheit erfolgen. Alternativ könnte auch auf nur einem Mirkocontroller ein geeigneter "watchdog"-Algorithmus implementiert werden, der die korrekte Funktion des Mikrocontrollers überwacht.

Vorzugsweise verfügt das Fahrzeug zusätzlich über mindestens einen Laserscanner, der in Fahrtrichtung liegende Hindernisse erfasst.

Die Kombination von mehreren unterschiedlichen Sensoren erhöht die Sicherheit des fahrerlosen Fahrzeugs zusätzlich, da der Steuerungseinheit so mehr dynamische Daten über die Umgebung des Fahrzeugs zur Verfügung stehen. Zudem ergänzen sich so die durch die einzelnen Sensoren gewonnen Daten. Zum Beispiel kann eine aus einem stark schalldämpfenden Material bestehende Wand unter Umständen erst sehr spät durch den mindestens einen Ultraschallsensor erkannt werden, während diese durch den mindestens einen Laserscanner bereits rechtzeitig erfasst wird. Dadurch kann sich das Fahrzeug gefahrlos durch eine Vielzahl an Umgebungen bewegen. Zudem ermöglicht eine Laserabtastung die Gewinnung von insbesondere dreidimensionalen Daten zur unmittelbaren Umgebung des Fahrzeugs.

Ferner kann das fahrerlose Fahrzeug auch über weitere Sensoren verfügen, wie zum Beispiel taktile Sensoren ("bumper"), Kameras sowie Beschleunigungssensoren, welche zur Gewinnung von Daten zur Umgebung des Fahrzeugs sowie zu dessen Bewegung verwendet werden können.

Bevorzugt ist der mindestens eine Laserscanner derart am Fahrzeug angeordnet, dass dieser den in Fahrtrichtung liegenden Raum im Wesentlichen parallel zur Bodenfläche in horizontaler Richtung abtastet. Ferner ist der mindestens eine Ultraschallsensor derart am Fahrzeug angeordnet, dass dieser den in Fahrtrichtung liegenden Raum im Wesentlichen in vertikaler Richtung zur Bodenfläche erfasst.

Da der mindestens eine Ultraschallsensor aufgrund der hohen Divergenz des ausgesandten Ultraschallsignals eine genaue Erfassung von Objekten, die in Fahrtrichtung seitlich des Fahrzeugs stehen, nicht möglich ist, erlaubt die erfindungsgemässe Anordnung des Laserscanners eine zuverlässige Erfassung von solchen Objekten.

Vorzugsweise ist mehr als nur ein einzelner Ultraschallsensor am Fahrzeug angeordnet, besonders bevorzugt sind mehrere Ultraschallsensoren an der in Fahrtrichtung vorne liegenden Seite des Fahrzeugs in vertikaler Richtung übereinander angeordnet. Dies ermöglicht eine möglichst lückenlose Erfassung des gesamten in Fahrtrichtung vor dem Fahrzeug befindlichen Raumes.

Alternativ kann der mindestens eine Laserscanner auch derart angeordnet sein, dass dieser den Raum innerhalb eines gewissen Winkelbereichs in Fahrtrichtung des Fahrzeugs abtastet. Ferner kann der mindestens eine Ultraschallsensor auch derart angeordnet sein, dass dieser einen anderen Raumbereich relativ zum fahrerlosen Fahrzeug erfasst.

Besonders bevorzugt ist die Auswerteeinheit derart ausgestaltet, dass ein Steuerungssignal an die Steuerungseinheit übermittelt wird, welche zum Anhalten des fahrerlosen Fahrzeugs führt, wenn der mindestens eine Ultraschallsensor und/oder der mindestens eine Laserscanner ein Objekt erfasst, welches sich innerhalb einer vordefinierten Entfernung zum Fahrzeug befindet, wobei die vordefinierte Entfernung in Abhängigkeit der Fahrgeschwindigkeit des Fahrzeugs durch die Steuerungseinheit anpassbar ist.

Wie ein Fachmann ohne Weiteres erkennt, ist eine derartige Ausgestaltung des fahrerlosen Fahrzeugs nicht nur auf fahrerlose Fahrzeuge mit dem beschriebenen Ultraschallsensor mit Funktionskontrolle beschränkt, sondern könnte auch bei fahrerlosen Fahrzeugen mit den bereits im Stand der Technik bekannten Ultraschallsensoren Anwendung finden.

Dadurch können der mindestens eine Ultraschallsensor und/oder der mindestens eine Laserscanner relativ einfach zur Verhinderung einer Kollision mit einem sich in Fahrtrichtung vor dem Fahrzeug befindliches Objekt einsetzen. Vorzugsweise wird durch den mindestens einen Ultraschallsensor und/oder durch den mindestens einen Laserscanner ein spezifisches Stoppsignal an die Steuerungseinheit übermittelt, sobald ein Objekt detektiert wird, welches sich innerhalb der vordefinierten Entfernung zum Fahrzeug befindet, um eine zusätzliche Verzögerung durch eine Auswertung der Sensordaten in der Steuerungseinheit zu vermeiden.

Die Anpassung der vordefinierten Entfernung an die Geschwindigkeit des Fahrzeugs erlaubt es, dass der Bremsweg des Fahrzeugs stets gross genug ist, um eine Kollision mit einem detektierten Objekt zu verhindern. Auch erlaubt dies, dass das Fahrzeug bei einer geringen Geschwindigkeit näher an Objekte heranfahren kann als bei hohen Geschwindigkeiten. Alternativ ist die vordefinierte Entfernung auch anhand der Zuladung des Fahrzeugs anpassbar, um die Zunahme des Bremsweges bei Zunahme des Gesamtgewichts des Fahrzeugs Rechnung zu tragen. Denkbar ist auch eine Anpassbarkeit der vordefinierten Entfernung anhand der Beschaffenheit der befahrenen Oberfläche. Alternativ kann auch die Steuerungseinheit anhand der Daten des mindestens einen Ultraschallsensors und/oder des mindestens einen Laserscanners berechnen, ob sich ein Objekt innerhalb der vordefinierten Entfernung befindet.

Ein weiterer Aspekt der vorliegenden Erfindung betrifft ein Verfahren zum Betreiben eines fahrerlosen Fahrzeugs, insbesondere eines erfindungsgemässen fahrerlosen Fahrzeugs mit einer Steuerungseinheit und mindestens einem Ultraschallsensor mit zwei über eine Akustiksubstanz akustisch verbundenen Ultraschallwandlern. In einem ersten Schritt des Verfahrens wird ein Ultraschallsignal durch den ersten Ultraschallwandler ausgesendet. In einem zweiten Schritt wird das Ultraschallsignal durch den zweiten Ultraschallwandler empfangen und durch eine Auswerteeinheit des Ultraschallsensors verarbeitet. Ferner wird ein durch die Akustiksubstanz veränderter Anteil des Ultraschallsignals durch den zweiten Ultraschallwandler empfangen und durch die Auswerteeinheit identifiziert. Mindestens ein Parameter dieses veränderten Anteils wird durch die Auswerteeinheit ermittelt. Anschliessend wird anhand des ermittelten Parameters ein Steuerungssignal an die Steuerungseinheit übertragen.

Bevorzugt erzeugt die Auswerteeinheit ein Steuerungssignal und überträgt dieses zur Steuerungseinheit, wobei das Steuerungssignal ein elektrisches Signal mit einer konstanten ersten Spannung umfasst, wenn die durch den zweiten Ultraschallwandler empfangenen Ultraschallsignale ein Objekt innerhalb einer vordefinierten Entfernung zum Ultraschallsensor anzeigen, oder aus einem periodisch zwischen der ersten Spannung und einer zweiten Spannung hin und her wechselnden elektrischen Signal besteht, wenn die durch den zweiten Ultraschallwandler empfangenen Ultraschallsignale kein Objekt innerhalb einer vordefinierten Entfernung zum Ultraschallsensor anzeigen.

Ein Signal, welches die konstante erste Spannung umfasst signalisiert der Steuerungseinheit, dass sich ein Objekt innerhalb der vorbestimmten Entfernung zum Fahrzeug befindet und daher ein Anhalten des Fahrzeugs nötig ist. Durch dieses relativ einfache Signal kann bei der Detektion eines Objekts innerhalb der vordefinierten Entfernung zum Fahrzeug die Steuerungseinheit sehr schnell reagieren und das Fahrzeug stoppen, ohne dass eine zusätzliche Signalauswertung durch die Steuerungseinheit nötig ist. Es versteht sich, dass die Steuerungseinheit das Fahrzeug erst stoppt, wenn das Steuerungssignal für eine längere Zeit auf der ersten Spannung verbleibt, als dies beim periodischen Wechsel zwischen der ersten und der zweiten Spannung der Fall ist.

Alternativ kann die Auswerteeinheit auch weitere Signale an die Steuerungseinheit übertragen, welche z.B. Daten zur Entfernung eines durch den mindestens einen Ultraschallsensor detektierten Objekts enthalten. Anhand dieser Daten kann die Steuerungseinheit allfällige Ausweichmanöver oder ein Anhalten des fahrerlosen Fahrzeugs veranlassen. Weiter bevorzugt können auch Daten von der Steuerungseinheit an die Auswerteeinheit übertragen werden, beispielsweise um spezifische Betriebsparameter der Auswerteeinheit zu verändern. Ferner könnte in einer alternativen Ausgestaltung das an die Steuerungseinheit übermittelte Steuerungssignal auch eine andere Signalform aufweisen.

Besonders bevorzugt wird die vordefinierte Entfernung in Abhängigkeit der Fahrgeschwindigkeit des Fahrzeugs variiert. Insbesondere nimmt die vordefinierte Entfernung mit zunehmender Geschwindigkeit des Fahrzeugs zu. Dadurch kann einem längeren Bremsweg des Fahrzeugs bei höherer Geschwindigkeit Rechnung getragen werden. Auch erlaubt eine derartige dynamische Anpassung der vordefinierten Entfernung, dass das Fahrzeug bei niedriger Geschwindigkeit näher an ein Objekt heranfahren kann. Alternativ könnte die vordefinierte Entfernung auch in Abhängigkeit der Zuladung des fahrerlosen Fahrzeugs oder aufgrund der Bodenbeschaffenheit variiert werden. Die zu verwendende vorbestimmte Entfernung wird insbesondere von der Steuerungseinheit an die Auswerteeinheit übermittelt.

Vorzugsweise wird das Steuerungssignal von einem ersten Mikrocontroller erzeugt und die fehlerfreie Funktion des ersten Mikrocontrollers wird durch Überwachung des Steuerungssignals durch einen zweiten Mikrocontroller überprüft.

Dies erlaubt das Erkennen einer Fehlfunktion des ersten Mikrocontrollers, wobei das Fahrzeug entsprechend durch die Steuerungseinheit gestoppt werden kann. Somit kann ausgeschlossen werden, dass durch eine Fehlfunktion oder einen Ausfall des ersten Mikrocontrollers das Fahrzeug mit einem Objekt kollidiert, was die Betriebssicherheit des Fahrzeugs erhöht.

Alternativ könnte die korrekte Funktionsweise des ersten Mikrocontrollers auch durch die Steuerungseinheit des fahrerlosen Fahrzeugs erfolgen oder im ersten Mikrocontroller könnte auch ein geeigneter "watchdog"-Algorithmus implementiert werden.

Insbesondere erfolgen die Wechsel von der ersten zur zweiten sowie von der zweiten zur ersten Spannung periodisch nach einer ersten vorbestimmten Zeitdauer, insbesondere nach 15 ms. Der zweite Mikrocontroller überwacht die Zeitdauer zwischen den Wechseln und setzt bei Überschreiten einer zweiten vorbestimmten Zeitdauer, insbesondere nach 20 ms nach einem Wechsel der Spannung das Steuerungssignal dauerhaft auf die erste Spannung.

Dadurch kann die korrekte Funktion des ersten Mikrocontrollers auf eine sehr einfache Art durch den zweiten Mikrocontroller überwacht werden. Sollte aus irgendeinem Grund, wie z. B. einem Absturz der Steuerungssoftware des ersten Mikrocontrollers ein Spannungswechsel im Ausgangssignal ausbleiben, so kann dies der zweite Mirkocontroller durch eine einfache Spannungsmessung am Ausgangssignal entdecken und das Ausgangssignal entsprechend dauerhaft auf die erste Spannung setzen, welche der Steuerungseinheit die Anwesenheit eines Objekts innerhalb der vordefinierten Entfernung signalisiert und somit zum Stopp des Fahrzeugs führt.

Sollte der erste Mikrocontroller eine Fehlfunktion aufweisen, bei der das Steuerungssignal auf der dauerhaft auf der ersten Spannung verbleibt, ist das Eingreifen des zweiten Mikrocontrollers grundsätzlich nicht nötig, da ein Steuerungssignal, welches ein konstantes Signal mit der ersten Spannung umfasst die Steuerungseinheit ohnehin zum Stoppen des Fahrzeugs veranlassen würde.

Alternativ sind auch andere Funktionsprüfungen denkbar, zum Beispiel über eine separate, periodische Abfrage die vom ersten Mikrocontroller an den ersten Mikrocontroller gesendet wird. Allerdings weist die erfindungsgemässe Lösung den Vorteil auf, dass eine permanente Überwachung des ersten Mikrocontrollers möglich ist. Weiter alternativ könnte der zweite Mikrocontroller natürlich auch ein anderes, spezifisches Signal an die Steuerungseinheit übermitteln, wenn eine Fehlfunktion des ersten Mikrocontrollers detektiert wird.

Vorzugsweise lässt der erste Mikrocontroller nach einer vordefinierten Anzahl an Wechseln, insbesondere nach fünf Wechseln von der zweiten Spannung zur ersten Spannung einen Spannungswechsel aus. Der zweite Mikrocontroller setzt daraufhin innerhalb einer dritten vorbestimmten Zeitdauer, insbesondere 5 ms, das Steuerungssignal für die erste vorbestimmte Zeitdauer auf die erste Spannung und anschliessend wieder auf die zweite Spannung. Der erste Mikrocontroller überwacht diesen durch den zweiten Mikrocontroller erzeugten Spannungswechsel des Steuerungssignals und setzt bei Ausbleiben desselben das Steuerungssignal dauerhaft auf die erste Spannung.

Dies erlaubt eine Kontrolle der korrekten Funktionsweise des zweiten Mikrocontrollers durch den ersten Mikrocontroller. Diese gegenseitige Überwachung der beiden Mikrocontroller eines Ultraschallsensors erhöht die Sicherheit zusätzlich.

Alternativ könnte auch eine Funktionskontrolle des zweiten Mikrocontrollers durch die Steuerungseinheit erfolgen. Weiter könnte auch eine periodische Kontrollabfrage durch den ersten Mikrocontroller an den zweiten Mikrocontroller erfolgen, wobei bei Ausbleiben einer geeigneten Antwort das Ausgangssignal durch den ersten Mikrocontroller dauerhaft auf die erste Spannung gesetzt wird.

Vorzugsweise wird eine Zeitdauer zwischen dem Aussenden von aufeinanderfolgenden Ultraschallsignalen durch den ersten Ultraschallwandler innerhalb eines vordefinierten Bereichs variiert.

Dadurch erfolgt das Aussenden der Ultraschallsignale in unregelmässigen Abständen. Dies hat den Vorteil, dass von einem anderen Ultraschallsensor, welches sich z. B. auf einem anderen fahrerlosen Fahrzeug befindet, ausgesandte Ultraschallsignale mit gleicher Frequenz durch das Fahrzeug besser unterschieden werden können. Bei einem regelmässigen Aussenden von Ultraschallsignale besteht ansonsten die Gefahr, dass zwei Sensoren die Ultraschallsignale synchron zueinander aussenden, wodurch sich empfangene Reflexionen der Ultraschallsignale nicht eindeutig einem Sensor zuordnen lasse würden.

Ferner wird es dadurch auch möglich, weit entfernte Objekte detektieren zu können, von denen die reflektierten Ultraschallsignale erst nach dem Aussenden eines weiteren Ultraschallsignals durch den Empfänger-Wandler empfangen werden. Bei einem regelmässigen Aussenden der Ultraschallsignale würden die reflektierten Ultraschallsignale eines weit entfernten Objektes immer nach derselben Zeitdauer nach dem Aussenden des nächsten Ultraschallsignals durch den Sender-Wandler vom Empfänger-Wandler empfangen werden. Die Auswerteeinheit ist jedoch nicht in der Lage zu unterscheiden, ob das empfangene Ultraschallsignal vom letzten oder einem früheren ausgesandten Ultraschallsignal stammt. Daher würde ein derartiges Signal als Reflektion des letzten ausgesandten Ultraschallsignals durch die Auswerteeinheit interpretiert werden. Dies würde dazu führen, dass die Auswerteeinheit diese Ultraschallsignale einem nicht existenten, nahen Objekt zuordnen würde.

Wird hingegen der zeitliche Abstand zwischen dem Aussenden der Ultraschallsignale variiert, so wird ein an einem fernen Objekt reflektiertes Ultraschallsignal, welches erst nach dem Aussenden des nächsten Ultraschallsignals durch den Sender-Wandler vom Empfänger-Wandler empfangen wird, nach unterschiedlichen Zeitdauern empfangen, während die von nahen Objekten reflektierten Ultraschallsignale, die durch den Empfänger-Wandler noch vor dem Aussenden des nächsten Ultraschallsignals durch den Sender-Wandler empfangen werden, nach jedem ausgesandten Ultraschallsignal stets nach derselben Zeitdauer empfangen werden. Mit einem geeigneten Filteralgorithmus lassen sich die Ultraschallsignale, die nach jedem Aussenden eines Ultraschallsignals durch den Empfänger-Wandler nach unterschiedlichen Zeitabständen empfangen werden ausfiltern, was die Detektion von nicht-existenten, nahen Objekten durch den Ultraschallsensor verhindert.

Wie ein Fachmann leicht erkennt, kann die erfindungsgemässe Variation der Zeitdauer zwischen dem Aussenden von aufeinanderfolgenden Ultraschallsignalen auch mit anderen als den hier beschriebenen Ultraschallsensoren mit Funktionskontrolle angewendet werden. Insbesondere kann ein derartiges Verfahren zum Betrieb von aus dem Stand der Technik bekannten Ultraschallsensoren verwendet werden.

Insbesondere bevorzugt wird jede Zeitdauer zwischen dem Aussenden von aufeinanderfolgenden Ultraschallsignalen als Funktion der Amplituden von einer ersten vorbestimmten Anzahl der veränderten Anteile, welche durch den zweiten Ultraschallwandler vorgängig empfangen wurden, berechnet.

Da sich die veränderten Anteile bei jeder Messung geringfügig unterscheiden, führt die Verwendung von deren Amplituden zur Berechnung der Zeitdauer zwischen dem Aussenden von zwei aufeinanderfolgenden Ultraschallsignalen dazu, dass sich die berechneten Zeitdauern zwischen dem Aussenden von einzelnen Ultraschallsignalen weitaus zufälliger voneinander unterscheiden, als dies z. B. bei der Verwendung eines klassischen Zufallsalgorithmus der Fall wäre, der anhand eines mathematischen Funktion arbeitet. Dadurch wird verhindert, dass zwei Ultraschallsensoren, die denselben Zufallsgenerator verwenden, dieselbe Variation von Zeitabständen zwischen dem Aussenden von Ultraschallsignalen aufweisen.

Die erste vorbestimmte Anzahl an veränderten Anteilen ist vorzugsweise von 3 bis 15, insbesondere bevorzugt von 6 bis 12 und ganz besonders bevorzugt 8.

Alternativ können zur Berechnung der variablen Zeitdauer auch andere Parameter verwendet werden, wie beispielsweise die Amplituden der ersten vorbestimmten Anzahl an empfangenen Ultraschallsignalen.

Die Auswerteeinheit berechnet vorzugsweise die Entfernung eines Objekts anhand der durch den zweiten Ultraschallwandler empfangenen Ultraschallsignale, wobei nur diejenigen empfangen Ultraschallsignale zur Bestimmung der Entfernung des einen Objekts verwendet werden, welche bei einer zweiten vorbestimmten Anzahl an aufeinanderfolgenden, vom ersten Ultraschallwandler ausgesandten Ultraschallsignalen nach derselben Zeitdauer durch den zweiten Ultraschallwandler empfangen werden.

Dadurch lassen sich Störgeräusche, welche zufälligerweise dieselbe Frequenz aufweisen wie die Ultraschallsignale und durch den Empfänger-Wandler empfangen werden, ausfiltern.

Die erste Spannung ist vorzugsweise kleiner als die zweite Spannung, wobei die erste Spannung insbesondere 0 Volt und die zweite Spannung insbesondere von 1 Volt bis 50 Volt beträgt. Insbesondere bevorzugt beträgt die zweite Spannung 24 Volt.

Prinzipiell müssen nicht spezifische Spannungen verwendet werden, wichtig ist nur, dass das Signal eine durch die Steuerungseinheit messbare Potentialdifferenz aufweist. Insbesondere kann beispielsweise die erste Spannung und/oder die zweite Spannung auch ein negatives Potential aufweisen. Wird als erste Spannung 0 Volt verwendet, hat dies den Vorteil, dass bei einem Ausfall des ersten Mikrocontrollers das Ausgangssignal automatisch 0 Volt beträgt.

Die vorliegende Erfindung betrifft im Weiteren auch einen Sensor, insbesondere für ein erfindungsgemässes fahrerloses Fahrzeug. Ein derartiger Sensor kann insbesondere bevorzugt auch in einem erfindungsgemässen Verfahren verwendet werden.

Der Ultraschallsensor umfasst eine Auswerteeinheit sowie zwei über eine Akustiksubstanz akustisch verbundene Ultraschallwandler, welche derart ausgestaltet sind, dass von einem der beiden Ultraschallwandler Ultraschallsignale aussendbar und vom anderen Ultraschallwandler empfangbar sind. Ein vom ersten Ultraschallwandler durch die Akustiksubstanz zum zweiten Ultraschallwandler übermittelter Anteil der Ultraschallsignale wird durch die Akustiksubstanz verändert. Die Auswerteeinheit ist derart ausgestaltet, dass diese veränderten Anteile der Ultraschallsignale als Prüfsignal identifzierbar sind. In Abhängigkeit mindestens eines Parameters des veränderten Anteils von wenigstens einem Ultraschallsignal, das durch die Auswerteeinheit ermittelt wird, wird ein Sensorsignal an die Steuerungseinheit übertragen.

Die beiden Ultraschallwandler sind vorzugsweise auf einem gemeinsamen Sensorträger montiert. Bei vorteilhaften Ausführungsformen ist die Akustiksubstanz in einem einseitig offenen Hohlraum zwischen dem Sensorträger und zumindest einem der beiden Ultraschallwandler angeordnet. Besonders vorteilhaft ist es, wenn die Akustiksubstanz zwischen dem Sensorträger und beiden Ultraschallwandlern angeordnet ist. Hierbei trennt vorzugsweise zumindest jeweils ein Teil der Akustiksubstanz sowohl die beiden Wandler untereinander als auch jeden Wandler von dem Sensorträger. Das Anordnen der Akustiksubstanz in einem Hohlraum zwischen dem Sensorträger und zumindest einem der beiden Ultraschallwandler hat den Vorteil, dass eine durch die Akustiksubstanz definierbare akustische Kopplung zwischen diesen Komponenten des Ultraschallsensors erreicht wird. Der Hohlraum muss nicht zwangsläufig einseitig offen sein, vielmehr kann es sich auch um einen geschlossenen oder mehrseitig offenen Hohlraum handeln.

Bei typischen Ausführungsformen umfasst die Akustiksubstanz zumindest eine Wandler-Ausnehmung zur Aufnahme zumindest eines der Ultraschallwandler. Besonders vorteilhaft ist es, wenn die Akustiksubstanz für jeden Ultraschallwandler jeweils eine Wandler-Ausnehmung umfasst. Eine solche Wandler-Ausnehmung hat den Vorteil, dass der in der Wandler-Ausnehmung aufgenommene Ultraschallwandler an einer festen Position innerhalb der Akustiksubstanz angeordnet ist, wodurch eine zuverlässige Funktion des Ultraschallsensors sichergestellt wird. Es ist jedoch auch möglich, dass die Akustiksubstanz keine Ausnehmung umfasst, sondern dass zumindest ein Ultraschallwandler lediglich auf die Akustiksubstanz aufgesetzt ist.

Bei typischen Ausführungsformen ist zumindest einer der Ultraschallwandler, bevorzugt beide Ultraschallwandler, in der Akustiksubstanz eingegossen. Dies hat den Vorteil, dass eine besonders enge und homogene Verbindung zwischen dem Ultraschallwandler und der Akustiksubstanz ermöglicht wird, da die - typischerweise zu Beginn eines Eingussvorgangs zunächst flüssige - Akustiksubstanz den Ultraschallwandler komplett umfliesst und anschliessend aushärtet. Besonders vorteilhaft ist es, wenn beide Ultraschallwandler in der Akustiksubstanz eingegossen sind.

Bei weiteren typischen Ausführungsformen ist zumindest einer der Ultraschallwandler in die Akustiksubstanz eingesetzt. Hierbei kommt typischerweise eine Akustiksubstanz zum Einsatz, welche bereits zu Beginn eines Fertlgungsvorgangs in fester Form vorliegt, wobei zumindest eine der Ausnehmungen auch bereits von der Akustiksubstanz umfasst ist. Eine solche Ausführungsform mit zumindest einem eingesetzten Ultraschallwandler hat den Vorteil, dass die Form der Ausnehmung genau vorgebbar ist und somit ein Formschluss zwischen Akustiksubstanz und Ultraschallwandler sehr gut kontrollierbar ist. In diesem Zusammenhang ist es besonders vorteilhaft, wenn die Ausnehmung in leerem Zustand - das heisst wenn der Ultraschallwandler nicht eingesetzt ist - kleiner ist, als der Ultraschallwandler. Bei einem runden Ultraschallwandler ist der Durchmesser der Ausnehmung kleiner als der Durchmesser des Ultraschallwandlers. Beim Einsetzen des Ultraschallwandlers in die Ausnehmung wird dann die Akustiksubstanz in der Nähe eines Randes der Ausnehmung derart komprimiert, dass sich die Ausnehmung gerade soweit aufweitet, dass der Ultraschallwandler in ihr Platz hat. Dabei ist der Ultraschallwandler typischerweise im Wesentlichen spielfrei in der Ausnehmung eingequetscht. Besonders vorteilhaft ist es, wenn beide Ultraschallsensoren in die Akustiksubstanz eingesetzt sind.

Bei vorteilhaften Ausführungsformen umfasst die Akustiksubstanz einen Übertragungssteg. Ein solcher Übertragungssteg ist vorteilhafterweise im Wesentlichen quaderförmig oder zylinderförmig oder im Wesentlichen säulenförmig mit im Wesentlichen eliptischem oder asymmetrischem Querschnitt ausgebildet. Der Übertragungssteg verbindet typischerweise die beiden Ultraschallwandler akustisch miteinander und/oder ist zwischen den beiden Ultraschallwandlern angeordnet, wobei eine Längsachse des Übertragungsstegs typischerweise im Wesentlichen parallel zu einer Verbindungslinie zwischen zwei geometrischen Mittelpunkten der beiden Ultraschallwandler verläuft. Besonders vorteilhaft ist es, wenn eine Steglänge des Übertragungsstegs 20% bis 80%, bevorzugt 30% bis 70%, besonders bevorzugt 40% bis 60% einer Länge des Ultraschallsensors beträgt. Besonders vorteilhaft ist es, wenn eine Stegbreite des Übertragungsstegs 20% bis 80%, bevorzugt 30% bis 70%, besonders bevorzugt 40% bis 60% einer Breite des Ultraschallsensors bzw. einer Breite der Akustiksubstanz beträgt. Prinzipiell ist es auch möglich, dass die Akustiksubstanz keinen Übertragungssteg umfasst.

Besonders vorteilhaft ist es, wenn die Akustiksubstanz einen ersten Aufnahmering und einen zweiten Aufnahmering umfasst. Dabei umfasst jeder Aufnahmering typischerweise eine Wandler-Ausnehmung. Mindestens ein Aufnahmering - bevorzugt beide Aufnahmeringe - hat/haben dabei vorteilhafterweise eine Ringdicke von 10% bis 100%, bevorzugt von 20% bis 90%, besonders bevorzugt von 30% bis 80% des Durchmessers der Wandler-Ausnehmung.

Typischerweise verbindet der Übertragungssteg die beiden Aufnahmeringe miteinander. Eine Akustiksubstanz, welche zwei durch einen Übertragungssteg verbundene Aufnahmeringe umfasst, hat gegenüber einer - beispielsweise - im Wesentlichen rechteckig geformten Akustiksubstanz den Vorteil, dass die Akustiksubstanz aufgrund der stark gewölbten Kontaktflächen zwischen den Aufnahmeringen und den Seitenwänden des Hohlraums besser im Hohlraum fixiert werden und somit besser gegen ein ungewolltes Verrutschen und/oder Herausfallen gesichert werden.

Bei typischen Ausführungsformen hat der Sensorträger eine im Wesentlichen quaderförmige Aussenform, wobei die Ultraschallsensoren vorteilhafterweise über die Aussenform und/oder den Sensorträger herausragen, insbesondere 1 mm bis 12 mm, bevorzugt 1,5 mm bis 10 mm, besonders bevorzugt 2 mm bis 8 mm. Dadurch ergibt sich der Vorteil, dass bei einer Montage des Ultraschallsensors in einem Gerät mit einem Gerätegehäuse die Ultraschallsensoren in Öffnungen des Gerätegehäuses hinein- bzw. sogar durch diese hindurchragen können, wobei der Sensorträger an einer Innenseite des Gehäuses anschlägt. Alternativ ist es auch möglich, dass die Ultraschallsensoren auf gleicher Höhe wie der Sensorträger abschliessen bzw. sogar von dem Sensorträger überragt werden.

Bei typischen Ausführungsformen beträgt ein Abstand zwischen den Ultraschallwandlern 20% bis 80%, bevorzugt 30% bis 70%, besonders bevorzugt 40% bis 60% der Länge des Ultraschallsensors. Versuche haben gezeigt, dass bei einem solchen Grössenverhältnis ein besonders günstiges Verhältnis zwischen Funktionalität, Dimensionierung und Kosten des Ultraschallsensors erreichbar ist. Alternativ können die Ultraschallwandler auch näher beieinander oder weiter entfernt voneinander angeordnet sein. Dies kann bei bestimmten Anwendungsfällen durchaus Sinn machen.

Bei typischen Ausführungsformen ist einer der Ultraschallwandler ein Sender-Wandler und der andere ein Empfänger-Wandler. Dies hat den Vorteil, dass sich auf diese Weise der Aufbau des Ultraschallsensors stark vereinfacht, da der Sender-Wandler lediglich über eine Sendersteuerung und der Empfänger-Wandler lediglich über eine Empfänger-Steuerung verfügen muss. Alternativ dazu ist es jedoch auch möglich, dass beide Ultraschallwandler prinzipiell sowohl senden als auch empfangen können.

Bei vorteilhaften Ausführungsformen beträgt ein Winkel zwischen einer Ausrichtungsrichtung des Sender-Wandlers und einer Ausrichtungsrichtung des Empfänger-Wandlers 0 bis 20 Grad, bevorzugt 0 bis 15 Grad, besonders bevorzugt 0 bis 10 Grad. Vorzugsweise sind der Sender-Wandler und der Empfänger-Wandler im Wesentlichen in die selbe Richtung ausgerichtet, d. h. die Flächennormalen von jeweils einer Wandleroberfläche eines der beiden Ultraschallwandlers verlaufen im Wesentlichen parallel. Eine derartige Ausrichtung des Sender-Wandlers und Empfänger-Wandlers hat den Vorteil, dass ein guter Kompromiss zwischen der Grösse eines Überwachungsraums und einer Zuverlässigkeit des Ultraschallsensors erreicht wird.

Bei einem erfindungsgemässen Verfahren zur Funktionsprüfung eines Ultraschallsensors, wird ein Ultraschallsignal von einem ersten Ultraschallwandler des Ultraschallsensors ausgesendet und von einem zweiten Ultraschallwandler des Ultraschallsensors empfangen. Dabei wird ein erster Anteil des Ultraschallsignals ausserhalb des Ultraschallsensors vom ersten zum zweiten Ultraschallwandler übermittelt. Ein zweiter Anteil des Ultraschallsignals wird dabei durch eine die beiden Ultraschallwandler akustisch miteinander verbindende Akustiksubstanz vom ersten zum zweiten Ultraschallwandler übermittelt, wobei die Akustiksubstanz den zweiten Anteil des Ultraschallsignals in charakteristischer Weise verändert, so dass den zweiten Ultraschallwandler ein definiertes Prüfsignal erreicht und in dem vom zweiten Ultraschallwandler empfangenen Prüfsignal der zweite, von der Akustiksubstanz veränderte Anteil des Ultraschallsignals identifiziert und/oder detektiert wird.

Bei einem erfindungsgemässen Verfahren zur Herstellung eines Ultraschallsensors umfassend einen Sender-Wandler und einen Empfänger-Wandler, wobei der Sender-Wandler und der Empfänger-Wandler auf einem gemeinsamen Sensorträger montiert sind, wird zunächst eine flüssige Akustiksubstanz in einen einseitig offenen Hohlraum zwischen den Wandlern und dem Sensorträger eingebracht, welche anschliessend zumindest teilweise aushärtet.

Bei einem weiteren vorteilhaften Verfahren zur Herstellung eines Ultraschallsensors umfassend einen Sender-Wandler und einen Empfänger-Wandler, wobei der Sender-Wandler und der Empfänger-Wandler auf einem gemeinsamen Sensorträger montiert sind, wird eine feste Akustiksubstanz mit zwei Wandler-Ausnehmungen in einen einseitig offenen Hohlraum zwischen den Wandlern und dem Sensorträger eingesetzt, wobei der Sender-Wandler und der Empfänger-Wandler in jeweils einer Wandler-Ausnehmung spielfrei festgelegt werden.

Aus der nachfolgenden Detailbeschreibung und der Gesamtheit der Patentansprüche ergeben sich weitere vorteilhafte Ausführungsformen und Merkmalskombinationen der Erfindung.

### Kurze Beschreibung der Zeichnungen

Die zur Erläuterung des Ausführungsbeispiels verwendeten Zeichnungen zeigen:
- Fig. 1:: Eine schematische Draufsicht eines erfindungsgemässen Ultraschallsensors,
- Fig. 2:: eine schematische Seitenansicht des Ultraschallsensors aus Fig. 1,
- Fig. 3:: eine schematische schräge Perspektivansicht des Ultraschallsensors aus Fig. 1,
- Fig. 4:: eine schematische Rückansicht des Ultraschallsensors der Fig. 1,
- Fig. 5:: eine schematische Ansicht eines in einem erfindungsgemässen fahrerlosen Fahrzeug montierten Ultraschallsensors,
- Fig. 6:: eine schematische Darstellung der Funktion eines erfindungsgemässen Ultraschallsensors,
- Fig. 7:: eine schematische Seitenansicht eines erfindungsgemässen fahrerlosen Fahrzeugs,
- Fig. 8:: eine Darstellung der durch die beiden Mikrocontroller erzeugten Signale sowie des Ausgangssignals, und
- Fig. 9a-9b:: Darstellungen der durch die beiden Mikrocontroller erzeugten Signale sowie des Ausgangssignals bei der Funktionskontrolle des zweiten Mikrocontrollers.

Grundsätzlich sind in den Figuren gleiche Teile mit gleichen Bezugszeichen versehen.

### Wege zur Ausführung der Erfindung

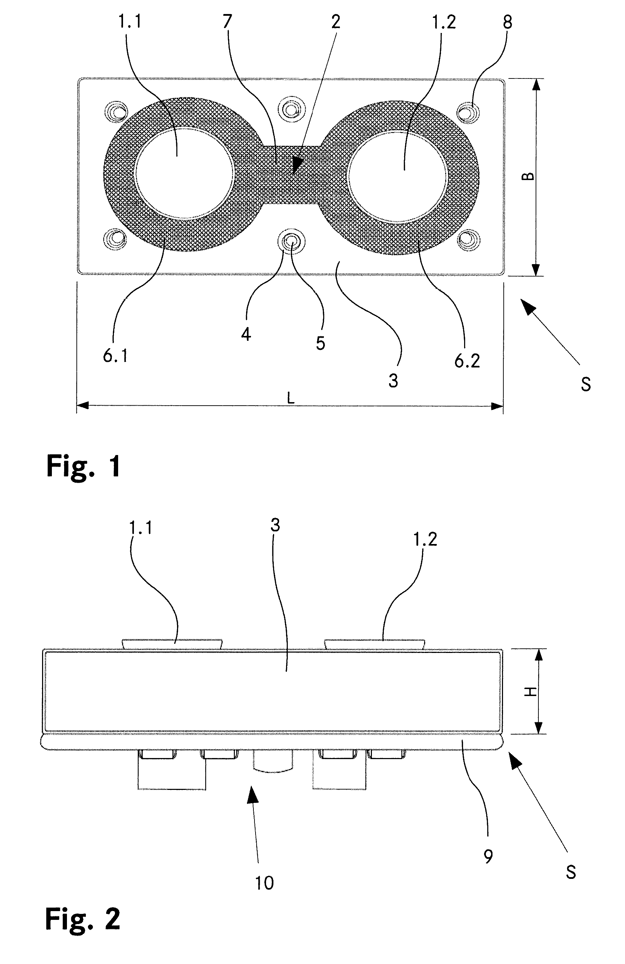

In Figur 1 ist eine schematische Draufsicht eines erfindungsgemässen Ultraschallsensors S gezeigt. Der Ultraschallsensor S umfasst zwei Ultraschallwandler 1.1 und 1.2, von welchen einer als Sender-Wandler und einer als Empfänger-Wandler konfiguriert ist. Die Ultraschallwandler 1.1 und 1.2 sind in einer Akustiksubstanz 2 vergossen, welche die Ultraschallwandler 1.1 und 1.2 von einem Sensorträger 3 trennt. Der Sensorträger 3 umfasst zwei Montagebohrungen 4 und ist mit Hilfe von zwei Befestigungsmitteln 5, welche die Montagebohrungen 4 durchgreifen, mit einer in Figur 1 nicht erkennbaren Platine verbunden. Die Akustiksubstanz 2 separiert sowohl die beiden Ultraschallwandler 1.1 und 1.2 voneinander, als auch jeden der Ultraschallwandler 1.1 und 1.2 von dem Sensorträger 3 und der Platine. Die Akustiksubstanz 2 umfasst zwei Aufnahmeringe 6.1 und 6.2, welche über einen Übertragungssteg 7 miteinander verbunden sind. Der Sensorträger 3 umfasst vier Befestigungsbohrungen 8, mit deren Hilfe der Ultraschallsensor in oder an einem in Figur 1 nicht näher gezeigten Fahrzeug befestigt werden kann. Die in Figur 1 gezeigte Ausführungsform des erfindungsgemässen Ultraschallsensors S hat eine Länge L und eine Breite B, wobei das Verhältnis Länge:Breite 2:1 beträgt. Ein mögliches konkretes Verhältnis Länge:Breite ist 60mm:30mm.

Figur 2 zeigt eine schematische Seitenansicht des erfindungsgemässen Ultraschallsensors S. In Figur 2 ist erkennbar, dass auf einer Rückseite des Sensorträgers 3 eine Platine 9 mit einer Elektronik 10, umfassend unter anderem eine nicht näher gekennzeichnete Auswerteeinheit, befestigt ist. Der Sensorträger hat eine Höhe H. Ein Verhältnis Breite:Höhe (siehe Figur 1) des Sensorträgers beträgt bei dem gezeigten Ausführungsbeispiel 3:1. In Figur 2 ist weiterhin erkennbar, dass die Ultraschallwandler 1.1 und 1.2 ein Stück weit (ca. 2 mm bis 3 mm) über den Sensorträger 2 hinausragen.

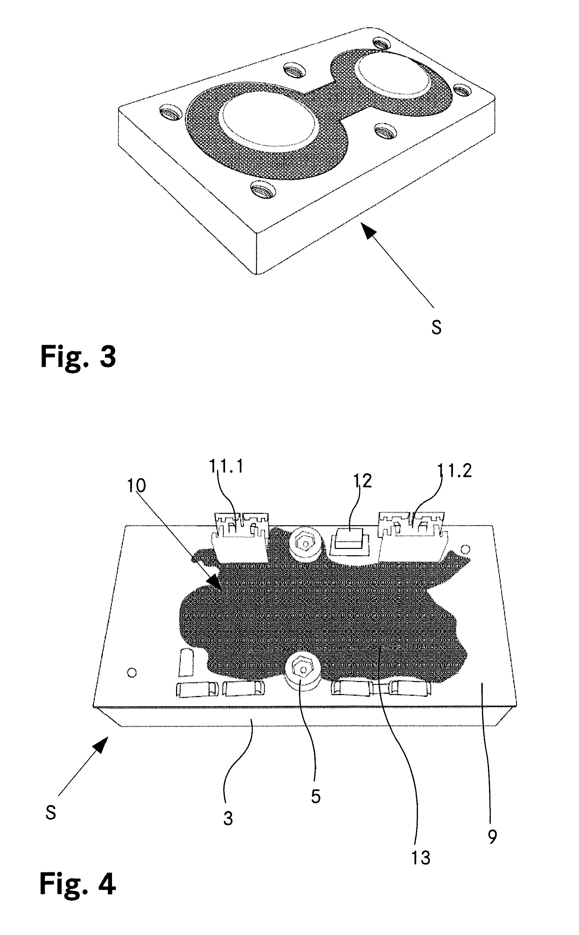

Figur 3 zeigt eine schematische schräge Perspektivansicht des erfindungsgemässen Ultraschallsensors S.

Figur 4 zeigt eine schematische Rückansicht des erfindungsgemässen Ultraschallsensors S. In Figur 4 sind die zwei Befestigungsmittel 5 erkennbar, mit Hilfe derer die Platine 9 an dem Sensorträger 3 befestigt ist. Die Platine 9 umfasst die Elektronik 10, welche zumindest eine nicht näher gekennzeichnete Auswerteeinheit, zwei Anschlussports 11, eine Spule 12 und eine Schutzgummierung 13, welche die Elektronik 10 zumindest teilweise bedeckt, umfasst.

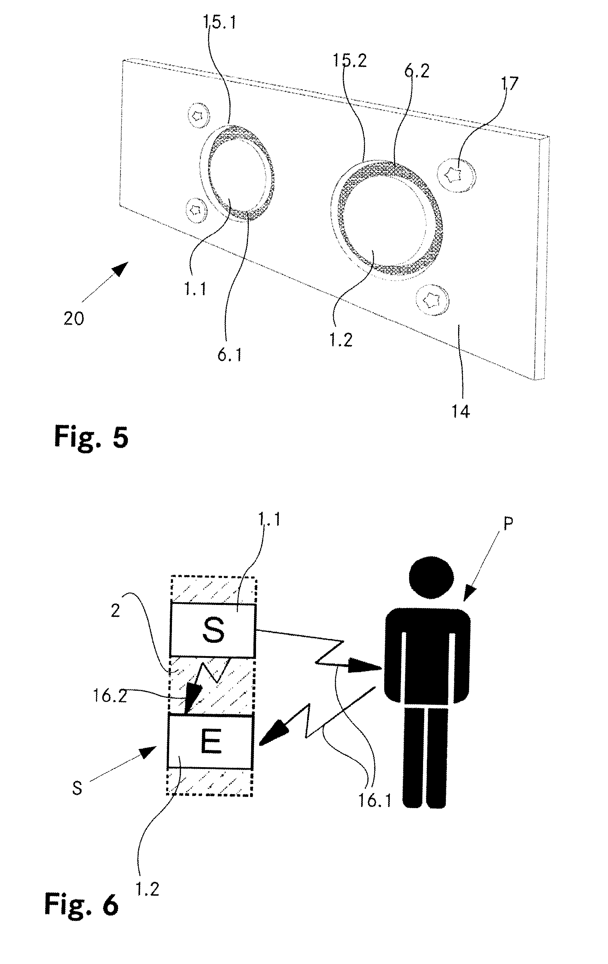

Figur 5 zeigt eine schematische Ansicht eines in einer Seitenwand 14 eines Fahrzeugs 20 montierten Ultraschallsensors S. Die Seitenwand 14 umfasst dabei zwei Wandleröffnungen 15.1 und 15.2, in welche jeweils ein Ultraschallwandler 1.1 bzw. 1.2 eingreift. Der Ultraschallsensor S, welcher die Ultraschallwandler 1.1 und 1.2 umfasst, ist mit Hilfe von vier Befestigungsschrauben 16 an einer Innenseite der Seitenwand 14 befestigt. Die Befestigungsschrauben 17 sind in die vier Befestigungsbohrungen 8 (siehe Figur 1) eingedreht.

Die Funktion des erfindungsgemässen Ultraschallwandlers S ist in Figur 6 visualisiert. Die zwei Ultraschallwandler 1.1 und 1.2, welche in die akustisch leitende aber gleichzeitig geeignete Dämpfungseigenschaften aufweisende Akustiksubstanz 2 eingebettet sind, können zum einen dazu genutzt werden, Objekte in einem Überwachungsraum des Ultraschallsensors S zu erkennen, und zum anderen dazu, eine Funktionsüberprüfung des Ultraschallsensors S durchzuführen. Die Funktionsweise der Erfindung ist wie folgt (für die folgenden Erklärungen wird angenommen, dass der Ultraschallwandler 1.1 ein Sender-Wandler und der Ultraschallwandler 1.2 ein Empfänger-Wandler ist): Wenn der Sender-Wandler 1.1 ein Ultraschallsignal aussendet, so pflanzt sich dieses Ultraschallsignal auf zwei Wegen fort:
Ein erster Teil 16.1 des Ultraschallsignals pflanzt sich in dem Überwachungsraum des Ultraschallsensors S fort und kann dort beispielsweise eine Person P treffen. Dieser erste Teil 16.1 des Ultraschallsignals wird dann an der Person P reflektiert und als Echo-Signal zurück zum Empfänger-Wandler 1.2 geleitet. Der Empfänger-Wandler 1.2 kann im Zusammenspiel mit Auswerteeinheit der Elektronik 10 aus der Stärke des Echo-Signals und den ihm bekannten physikalischen Eigenschaften des Überwachungsraums - beispielsweise Luft - den Abstand der Person P von dem Ultraschallsensor S ermitteln oder einfach nur die Präsenz der Person P detektieren.

Zusätzlich zum ersten Teil 16.1 des Ultraschallsignals, welcher sich in den Überwachungsraum hinein ausbreitet, breitet sich ein zweiter Teil 16.2 des Ultraschallsignals in die Akustiksubstanz 2 hinein aus. Die Materialeigenschaften der Akustiksubstanz 2 sind so gewählt, dass der zweite Teil 16.2 des Ultraschallsignals auf seinem Weg vom Sender-Wandler 1.1 zum Empfänger-Wandler soweit gedämpft wird, dass er von dem Empfänger-Wandler zwar noch eindeutig als Prüfsignal detektierbar ist, dass er jedoch niemals grösser ist, als ein Echo-Signal von einem im Überwachungsraum des Ultraschallsensors S befindlichen Objekt, z. B. einer Person P.

Der Betrieb des Ultraschallsensors S stellt sich typischerweise so dar, dass der Empfänger-Wandler in periodischen Abständen Ultraschallsignale aussendet, welche sich jeweils in einen ersten Teil 16.1 - abgestrahlt in den Überwachungsraum hinein - und einen zweiten Teil 16.2 - abgestrahlt in die Akustiksubstanz 2 hinein - aufspalten. Am Empfänger-Wandler 1.2 trifft somit nach einer bekannten Zeitspanne ein nach Form und Stärke bekanntes Prüfsignal, nämlich der von der Akustiksubstanz gedämpfte zweite Teil 16.2 des vom Sender-Wandler 1.1 ausgesendeten Ultraschallsignals, ein. Wird dieses Prüfsignal zu einem bestimmten Zeitpunkt während des Betriebs des Ultraschallsensors S nicht detektiert, so ist entweder der Sender-Wandler 1.1 oder ein zur Generierung der Ultraschallimpulse dienender Teil der Elektronik 10 oder der Empfänger-Wandler 1.2 oder ein zum Erkennen des Prüfsignals dienender Teil der Elektronik 10 defekt. Mit dieser Methode kann also sichergestellt werden, dass ein Objekt, wenn es in den Überwachungsraum des Ultraschallsensors käme, erkannt werden würde. Damit werden also sowohl der Sender als auch der Empfänger fortlaufend auf korrekte Funktion untersucht.

Wenn sich im Überwachungsraum des Ultraschallsensors S ein Objekt - z. B. die in Figur 6 gezeigte Person P - befindet, so kommt eine gewisse Zeit nach dem Aussenden des Ultraschallsignals durch den Sender-Wandler 1.1 zusätzlich zu dem Prüfsignal - basierend auf dem zweiten Teil 16.2 des Ultraschallsignals - ein Echo-Signal - basierend auf dem ersten Teil 16.1 des Ultraschallsignals - an. Durch die Materialeigenschaften der Akustiksubstanz 2 ist gewährleistet, dass ein solches Echo-Signal eines im Überwachungsraum des Ultraschallsensors befindlichen Objekts stets grösser ist, als das Prüfsignal. Somit kann der Ultraschallsensor S aus der Detektion eines Signals, welches, grösser als das wohlbekannte Prüfsignal ist, stets auf die Präsenz eines Objekts im Überwachungsraum schliessen und ggf. seinen Abstand bestimmen.

Bei der Fertigung des erfindungsgemässen Ultraschallsensors S werden zuerst die Ultraschallwandler 1.1 und 1.2 mit der Platine 9 und der Elektronik 10 verbunden. Dann wird der Sensorträger 3 mit Hilfe der Befestigungsmittel 5 auf die Platine 9 aufgeschraubt. Anschliessend wird ein in diesem Fertigungsstadium vorhandener einseitig offener Hohlraum zwischen dem Sensorträger 3 und den Ultraschall-Wandlern 1.1 und 1.2 mit der in diesem Fertigungsstadium flüssigen Akustiksubstanz 2 verfüllt, wodurch die Ultraschallwandler 1.1 und 1.2 in der Akustiksubstanz 2 vergossen werden. Die zunächst flüssige Akustiksubstanz 2 härtet dann nach und nach aus.

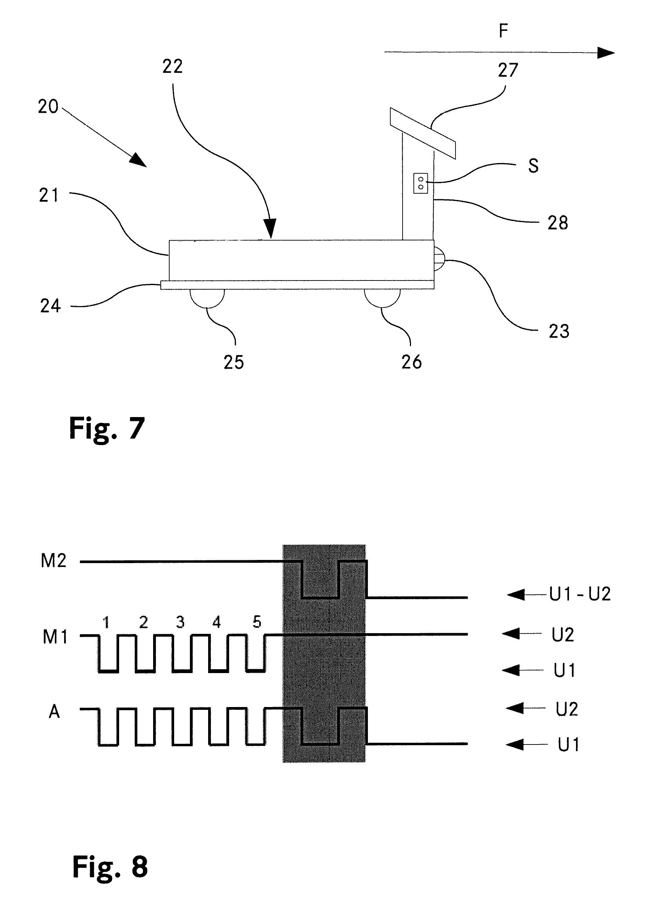

In Figur 7 ist eine schematische Seitenansicht eines erfindungsgemässen fahrerlosen Fahrzeugs 20 abgebildet. Das fahrerlose Fahrzeug 20 verfügt über ein Gehäuse 21, welches eine Ladefläche 22 für Waren oder für auswechselbare Module aufweist. Durch die Verwendung von auswechselbaren Modulen kann das fahrerlose Fahrzeug 20 für verschiedene Aufgaben eingesetzt werden, wie zum Beispiel dem Transport von unterschiedlichen Waren, für Reinigungs- oder Überwachungsaufgaben.

Das fahrerlose Fahrzeug 20 verfügt zudem über eine Steuerungseinrichtung 27, die beim gezeigten Ausführungsbeispiel über ein zusätzliches Bedienfeld verfügt, mit dem einzelne Befehle durch eine Bedienperson eingegeben werden können. Insbesondere verfügt das Bedienfeld auch über einen Notstoppknopf, um im Notfall das Fahrzeug sofort stoppen zu können. Die Steuerungseinrichtung verfügt zudem über Kommunikationsschnittstellen, z. B. über einen USB-Steckplatz oder über eine drahtlose Kommunikationsschnittstelle, wie einem W-LAN oder Bluetooth Empfänger, um Arbeitsaufträge zu erhalten sowie Daten mit einem externen Computernetzwerk austauschen zu können. Die Steuerungseinrichtung 27 ist bei der gezeigten Ausführungsform des fahrerlosen Fahrzeugs 20 auf einem Säule 28 angebracht, um für eine Bedienperson auf einer angenehmen Höhe angeordnet zu sein.

Auf der Säule 28 ist der mindestens eine Ultraschallsensor S angebracht, welcher derart angeordnet ist, dass dieser den in Fahrtrichtung F vor dem fahrerlosen Fahrzeug 20 liegenden Raum erfassen kann. Weiter verfügt das fahrerlose Fahrzeug 20 über einen Laserscanner 23, welcher ebenfalls den in Fahrtrichtung F vor dem fahrerlosen Fahrzeug 20 liegenden Raum abtastet. Der Laserscanner 23 ist bei der gezeigten Ausführungsform derart am Gehäuse 21 des fahrerlosen Fahrzeugs 20 angeordnet, dass dieser den in Fahrtrichtung F vor dem fahrerlosen Fahrzeug 20 liegenden Raum in Bodennähe im Wesentlichen Parallel zum Boden abtasten kann.

Im Weiteren verfügt das fahrerlose Fahrzeug in Fahrtrichtung F vorne liegend über eine angetriebene Achse mit zwei Antriebsrädern 26. Der Antrieb des fahrerlosen Fahrzeugs 20 erfolgt über mindestens einen Elektromotor, der durch wenigstens einen Akkumulator mit Strom versorgt wird (beide nicht gezeigt). In Richtung der Fahrtrichtung F hinten liegend ist ein einzelnes, im Wesentlichen um 180° drehbar gelagertes Steuerungsrad 25 angeordnet. Ein nach diesem Dreiradprinzip gebautes fahrerloses Fahrzeug kann sich besonders gut in engen Räumen bewegen, da enge Kurvenradien befahren werden können. Der Antrieb ist ferner derart ausgelegt, dass sich das fahrerlose Fahrzeug 20 auch rückwärts, d.h. entgegen der in der Figur 7 gezeigten Fahrtrichtung F bewegen kann, zum Beispiel um an einer Ladestation andocken zu können. Rund um das Fahrzeug ist zudem ein taktiler Sensor 24, ein sog. "bumper" angeordnet, der eine allfällige Kollision des fahrerlosen Fahrzeugs 20 mit einem Objekt detektiert und ein entsprechendes Stoppsignal an die Steuerungseinheit 27 sendet.

Die Figur 8 zeigt die durch die beiden Mikrocontroller erzeugten Signale M1, M2 sowie das Steuerungssignal A, welches von der Auswerteeinheit des Ultraschallsensors an die Steuerungseinheit 27 übertragen wird. Das durch den ersten Mikroprozessor erzeugte Signal M1 umfasst ein periodisch von einer ersten Spannung U1 zu einer zweiten Spannung U2 wechselndes elektrisches Signal, wobei ein Wechsel bevorzugt alle 15 ms stattfindet, d.h. die Frequenz des Signals beträgt 66 2/3 Hz. Das elektrische Signal ist beim gezeigten Ausführungsbeispiel als Rechteckschwingung ausgebildet. Alternativ kann das elektrische Signal natürlich auch als Sinus-, Dreieck- oder Sägezahnschwingung ausgestaltet sein. Das durch den ersten Mikrocontroller erzeugte Signal M1 wird als Steuerungssignal A an die Steuerungseinheit 27 ausgegeben, wobei der zweite Mikrocontroller den periodischen Spannungswechsel des Steuerungssignals A überwacht. Sollte ein Spannungswechsel nicht innerhalb einer zweiten vorbestimmten Zeitdauer von 20 ms erfolgen, so setzt der zweite Mikrocontroller das Ausgangssignal A für die erste vorbestimmte Zeitdauer auf die erste Spannung U 1. Dies kann zum Beispiel dadurch erfolgen, dass der zweite Mikrocontroller ein zweites Signal M2 mit einer Spannung erzeugt, welche bei Überlagerung mit dem durch den ersten Mikrocontroller erzeugten ersten Signal M1 ein Ausgangssignal A mit der ersten Spannung U1 ergibt. Im dargestellten Fall erzeugt demnach der zweite Mikrocontroller ein zweites Signal M2 mit einer Spannung von U 1 - U2. Vorzugsweise beträgt die Spannung U 1 0 Volt und die zweite Spannung U2 24 Volt.

Nach der ersten vordefinierten Zeitdauer setzt der zweite Mikrocontroller das Ausgangssignal durch Erzeugung eines geeigneten zweiten Signals M2 auf die Spannung U2. Erfolgt abermals nach der zweiten vordefinierten Zeitdauer kein Spannungswechsel im Signal M1 und damit im Steuerungssignal A setzt der zweite Mikroprozessor das Steuerungssignal A dauerhaft auf die erste Spannung U1, da angenommen werden kann, dass der erste Mikrocontroller nicht mehr ordnungsgemäss funktioniert.

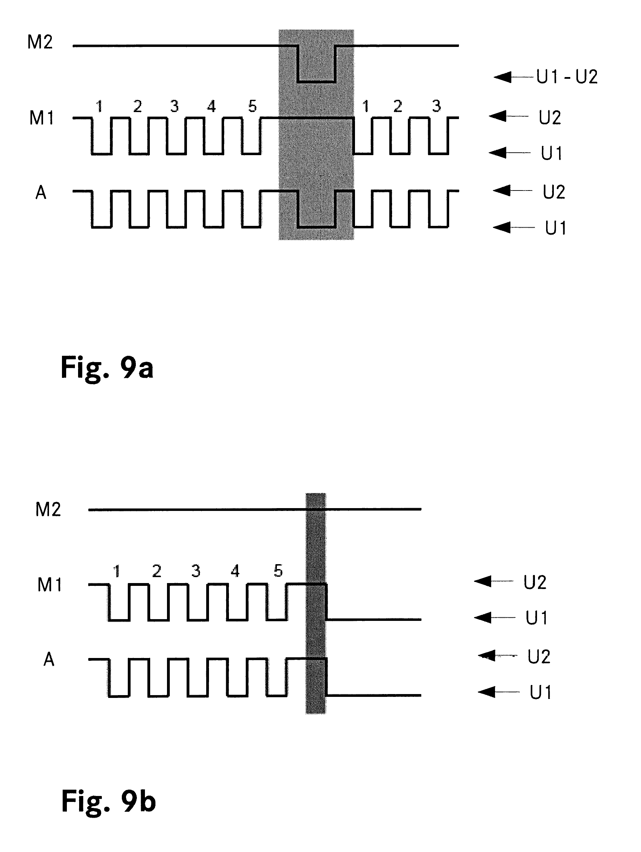

Der Grund für den durch den zweiten Mikrocontroller verursachten Spannungswechsel des Steuerungssignals A auf die zweite Spannung U2 liegt darin, dass dies eine Funktionskontrolle des zweiten Mikrocontrollers durch den ersten Mikrocontroller ermöglicht, wie in der Figur 9 dargestellt. Die Figur 9a stellt die Funktionskontrolle bei einem korrekt arbeitenden zweiten Mikrocontroller dar. Nach einer bestimmten Anzahl an Wechseln - in der gezeigten Ausführungsform sind es fünf Wechsel - von der ersten Spannung U1 zur zweiten Spannung U2 erfolgt durch den ersten Mikrocontroller innerhalb der ersten vorbestimmten Zeitdauer kein Wechsel zur Spannung U1. Daraufhin erzeugt der zweite Mikrocontroller ein Signal M2, welches das Steuerungssignal für die erste vorbestimmte Zeitdauer auf die Spannung U1 setzt. Nach dem erfolgten Wechsel zur Spannung U2 zurück, generiert der erste Mikrocontroller das gewohnte elektrische Signal M1 mit dem periodischen Spannungswechsel.

Die Figur 9b stellt die Funktionskontrolle bei einem defekten oder nicht korrekt arbeitenden zweiten Mikrocontroller dar. Nachdem der erste Mikrocontroller beim ersten Signal M1 nach dem fünften Wechsel von der Spannung U1 zur Spannung U2 für eine Zeitdauer, die länger als die zweite vorbestimmte Zeitdauer ist, auf der Spannung U2 verbleibt, sollte normalerweise der zweite Mikrocontroller das Steuerungssignal auf die erste Spannung U1 1 setzen. Geschieht dies, wie in der Figur 9b gezeigt, nicht, so setzt der erste Mikrocontroller das Steuerungssignal dauerhaft auf die erste Spannung U 1.

## Patentansprüche

1. Fahrerloses Fahrzeug mit einer Steuerungseinheit (27) und mindestens einem Ultraschallsensor (S) zum Erfassen von Objekten im Umkreis des fahrerlosen Fahrzeugs (20), insbesondere in Fahrtrichtung (F), wobei der Ultraschallsensor (S) eine Auswerteeinheit sowie zwei über eine Akustiksubstanz (2) akustisch verbundene Ultraschallwandler (1.1, 1.2) umfasst, welche derart ausgestaltet sind, dass von einem der beiden Ultraschallwandler (1.1, 1.2) Ultraschallsignale aussendbar und vom anderen Ultraschallwandler (1.1, 1.2) empfangbar sind, wobei ein vom ersten Ultraschallwandler (1.1, 1.2) durch die Akustiksubstanz (2) zum zweiten Ultraschallwandler (1.1, 1.2) übermittelter Anteil (16.2) der Ultraschallsignale durch die Akustiksubstanz (2) verändert wird und die Auswerteeinheit derart ausgestaltet ist, dass diese veränderten Anteile (16.2) der Ultraschallsignale als Prüfsignal identifizierbar sind, wobei die Auswerteeinheit weiter derart ausgestaltet ist, dass in Abhängigkeit mindestens eines Parameters des veränderten Anteils (16.2) eines Ultraschallsignals, das durch die Auswerteeinheit ermittelt wird, ein Steuerungssignal (A) an die Steuerungseinheit (27) übertragen wird, **dadurch gekennzeichnet, dass** die Auswerteeinheit über einen ersten Mikrocontroller und einen zweiten Mikrocontroller verfügt, wobei der erste Mikrocontroller anhand der durch einen der zwei Ultraschallwandler (1.1, 1.2) empfangenen Ultraschallsignale das Steuerungssignal (A) für die Steuerungseinheit (27) des fahrerlosen Fahrzeugs (20) erzeugt und der zweite Mikrocontroller derart ausgestaltet ist, dass dieser die korrekte Funktion des ersten Mikrocontrollers anhand des erzeugten Steuerungssignals (A) überwacht.

2. Fahrerloses Fahrzeug nach Anspruch 1, **dadurch gekennzeichnet, dass** das fahrerlose Fahrzeug (20) zusätzlich über mindestens einen Laserscanner (23) verfügt, der in Fahrtrichtung (F) liegende Hindernisse erfasst.

3. Fahrerloses Fahrzeug nach Anspruch 2, **dadurch gekennzeichnet, dass** der mindestens eine Laserscanner (23) derart am Fahrzeug angeordnet ist, dass dieser den in Fahrtrichtung (F) liegenden Raum im Wesentlichen parallel zur Bodenfläche in horizontaler Richtung abtastet und der mindestens eine Ultraschallsensor (S) derart am Fahrzeug angeordnet ist, dass dieser den in Fahrtrichtung (F) liegenden Raum im Wesentlichen in vertikaler Richtung zur Bodenfläche erfasst.

4. Fahrerloses Fahrzeug nach einem der Ansprüche 1 bis 3, **dadurch gekennzeichnet, dass** die Auswerteeinheit derart ausgestaltet ist, dass ein Steuerungssignal (A) an die Steuerungseinheit (27) übermittelt wird, welches zum Anhalten des fahrerlosen Fahrzeugs führt, wenn der mindestens eine Ultraschallsensor (S) und/oder der mindestens eine Laserscanner (23) ein Objekt erfasst, welches sich innerhalb einer vordefinierten Entfernung zum fahrerlosen Fahrzeug (20) befindet, wobei die vordefinierte Entfernung in Abhängigkeit der Fahrgeschwindigkeit des fahrerlosen Fahrzeugs (20) durch die Steuerungseinheit (27) anpassbar ist.

5. Verfahren zum Betreiben eines fahrerlosen Fahrzeugs (20), insbesondere nach einem der Ansprüche 1 bis 4, mit einer Steuerungseinheit (27) und mindestens einem Ultraschallsensor (S) mit zwei über eine Akustiksubstanz (2) akustisch verbundenen Ultraschallwandlern (1.1, 1.2), umfassend die Schritte:
a) Aussenden eines Ultraschallsignals durch einen Ultraschallwandler (1.1, 1.2);
b) Empfangen des Ultraschallsignals durch den zweiten Ultraschallwandler (1.1, 1.2) und Verarbeitung desselben durch eine Auswerteeinheit des Ultraschallsensors (S);
c) Empfangen eines durch die Akustiksubstanz veränderten Anteiles (16.2) des Ultraschallsignals durch den zweiten Ultraschallwandler (1.1, 1.2) und Identifikation desselben durch die Auswerteeinheit;
d) Ermitteln mindestens eines Parameters des veränderten Anteils (16.2) des empfangenen Ultraschallsignals durch die Auswerteeinheit;
e) Übertragen eines Steuerungssignals an die Steuerungseinheit (27) in Abhängigkeit mindestens eines Parameters des veränderten Anteils (16.2) eines Ultraschallsignals, das durch die Auswerteeinheit ermittelt wird;
**dadurch gekennzeichnet, dass**
f) das Steuerungssignal (A) ein elektrisches Signal mit einer konstanten ersten Spannung (U1) umfasst, wenn die durch den zweiten Ultraschallwandler (1.2) empfangenen Ultraschallsignale ein Objekt innerhalb einer vordefinierten Entfernung zum Ultraschallsensor (S) anzeigen, oder aus einem periodisch zwischen der ersten Spannung (U1) und einer zweiten Spannung (U2) hin und her wechselnden elektrischen Signal besteht, wenn die durch den zweiten Ultraschallwandler (1.2) empfangenen Ultraschallsignale kein Objekt innerhalb einer vordefinierten Entfernung zum Ultraschallsensor (S) anzeigen, wobei das Steuerungssignal (A) von einem ersten Mikrocontroller erzeugt wird und die fehlerfreie Funktion des ersten Mikrocontrollers durch Überwachung des Steuerungssignals (A) durch einen zweiten Mikrocontroller überprüft wird

6. Verfahren nach Anspruch 5, **dadurch gekennzeichnet, dass** die vordefinierte Entfernung in Abhängigkeit der Fahrgeschwindigkeit des fahrerlosen Fahrzeugs (20) variiert wird.

7. Verfahren nach Anspruch 5 oder 6, **dadurch gekennzeichnet, dass** die Wechsel von der ersten Spannung (U1) zur zweiten Spannung (U2) sowie von der zweiten Spannung (U2) zur ersten Spannung (U1) periodisch nach einer ersten vorbestimmten Zeitdauer, insbesondere nach 15 ms erfolgen, wobei der zweite Mikrocontroller die Zeitdauer zwischen den Wechseln überwacht und bei Überschreiten einer zweiten vorbestimmten Zeitdauer, insbesondere nach 20 ms nach einem Wechsel der Spannung das Steuerungssignal (A) dauerhaft auf die erste Spannung (U1) setzt.

8. Verfahren nach Anspruch 7, **dadurch gekennzeichnet, dass** der erste Mikrocontroller nach einer vordefinierten Anzahl an Wechseln, insbesondere nach fünf Wechseln von der zweiten Spannung (U2) zur ersten Spannung (U1) einen Spannungswechsel auslässt, wobei der zweite Mikrocontroller innerhalb einer dritten vorbestimmten Zeitdauer, insbesondere 5 ms, das Steuerungssignal (A) für die erste vorbestimmte Zeitdauer auf die erste Spannung (U1) und anschliessend wieder auf die zweite Spannung (U2) setzt, wobei der erste Mikrocontroller den durch den zweiten Mikrocontroller erzeugten Spannungswechsel des Steuerungssignals (A) überwacht und bei Ausbleiben desselben das Steuerungssignal (A) dauerhaft auf die erste Spannung (U1) setzt.

9. Verfahren nach einem der Ansprüche 5 bis 8, **dadurch gekennzeichnet, dass** eine Zeitdauer zwischen dem Aussenden von aufeinanderfolgenden Ultraschallsignalen (16.1) durch den ersten Ultraschallwandler (1.1) innerhalb eines vordefinierten Bereichs variiert wird.

10. Verfahren nach Anspruch 9, **dadurch gekennzeichnet, dass** jede Zeitdauer zwischen dem Aussenden von aufeinanderfolgenden Ultraschallsignalen (16.1) als Funktion der Amplituden einer ersten vorbestimmten Anzahl an veränderten Anteilen (16.2), welche durch den zweiten Ultraschallwandler (1.1) vorgängig empfangen wurden, berechnet wird.

11. Verfahren nach einem der Ansprüche 5 bis 10, **dadurch gekennzeichnet, dass** die Auswerteeinheit die Entfernung eines Objekts anhand der durch den zweiten Ultraschallwandler (1.2) empfangenen Ultraschallsignale (16.1) berechnet, wobei nur diejenigen empfangenen Ultraschallsignale (16.1) zur Bestimmung der Entfernung des Objekts verwendet werden, welche bei einer zweiten vorbestimmten Anzahl an aufeinanderfolgenden, vom ersten Ultraschallwandler (1.1) ausgesandten Ultraschallsignalen (16.1) nach derselben Zeitdauer durch den zweiten Ultraschallwandler (1.2) empfangen werden.

12. Verfahren nach einem der Ansprüche 5 bis 11, **dadurch gekennzeichnet, dass** die erste Spannung (U1) kleiner als die zweite Spannung (U2) ist, wobei die erste Spannung (U1) insbesondere 0 Volt und die zweite Spannung (U2) insbesondere von 1 Volt bis 50 Volt, vorzugsweise 24 Volt beträgt.

## Claims

1. Driverless vehicle comprising a control unit (27) and at least one ultrasound sensor (S) for registering objects in the surroundings of the driverless vehicle (20), in particular in the direction (F) of travel, wherein the ultrasound sensor (S) comprises an evaluation unit and two ultrasound transducers (1.1, 1.2) which are connected acoustically via an acoustic substance (2) and which are configured in such a way that ultrasound signals can be emitted from one of the two ultrasound transducers (1.1, 1.2) and can be received by the other ultrasound transducer (1.1, 1.2), wherein a component (16.2) of the ultrasound signals which is transmitted from the first ultrasound transducer (1.1, 1.2) to the second ultrasound transducer (1.1, 1.2) through the acoustic substance (2) is modified by the acoustic substance (2), and the evaluation unit is configured in such a way that these modified components (16.2) of the ultrasound signals can be identified as a check signal, wherein the evaluation unit is also configured in such a way that a control signal (A) is transmitted to the control unit (27) as a function of at least one parameter of the modified component (16.2) of an ultrasonic signal which is determined by the evaluation unit, **characterized in that** the evaluation unit has a first microcontroller and a second microcontroller, wherein the first microcontroller generates the control signal (A) for the control unit (27) of the driverless vehicle (20) on the basis of the ultrasound signals received by one of the two ultrasound transducers (1.1, 1.2), and the second microcontroller is configured in such a way that it monitors the correct function of the first microcontroller on the basis of the generated control signal (A).

2. Driverless vehicle according to Claim 1, **characterized in that** the driverless vehicle (20) additionally has at least one laser scanner (23) which registers obstacles located in the direction (F) of travel.

3. Driverless vehicle according to Claim 2, **characterized in that** the at least one laser scanner (23) is arranged on the vehicle in such a way that the space located in the direction (F) of travel is scanned by said laser scanner (23) substantially parallel to the floor surface/ground surface in the horizontal direction, and the at least one ultrasound sensor (S) is arranged on the vehicle in such a way that the space located in the direction (F) of travel is registered by said ultrasound sensor (S) substantially in the vertical direction with respect to the floor surface/ground surface.

4. Driverless vehicle according to one of Claims 1 to 3, **characterized in that** the evaluation unit is configured in such a way that a control signal (A) is transmitted to the control unit (27), which control signal (A) causes the driverless vehicle to stop if the at least one ultrasound sensor (S) and/or the at least one laser scanner (23) registers an object which is located within a predefined distance from the driverless vehicle (20), wherein the predefined distance can be adapted by the control unit (27) as a function of the velocity of the driverless vehicle (20).

5. Method for operating a driverless vehicle (20) in particular according to one of Claims 1 to 4, comprising a control unit (27) and at least one ultrasound sensor (S) with two ultrasound transducers (1.1, 1.2) which are acoustically connected via an acoustic substance (2), comprising the steps:
a) emission of an ultrasonic signal by an ultrasound transducer (1.1, 1.2);
b) reception of the ultrasonic signal by the second ultrasound transducer (1.1, 1.2) and processing thereof by an evaluation unit of the ultrasound sensor (S);
c) reception of a component (16.2) of the ultrasonic signal, which is modified by the acoustic substance, by the second ultrasound transducer (1.1, 1.2) and identification thereof by the evaluation unit;
d) determination of at least one parameter of the modified component (16.2) to the received ultrasonic signal by the evaluation unit;
e) transmission of a control signal to the control unit (27) as a function of at least one parameter of the modified component (16.2) of an ultrasonic signal which is determined by the evaluation unit;
**characterized in that**
f) the control signal (A) comprises an electrical signal with a constant first voltage (U1) if the ultrasound signals received by the second ultrasound transducer (1.2) indicate an object within a predefined distance from the ultrasound sensor (S), or said control signal (A) is composed of an electrical signal which changes to and fro periodically between the first voltage (U1) and a second voltage (U2) if the ultrasound signals received by the second ultrasound transducer (1.2) do not indicate an object within a predefined distance from the ultrasound sensor (S), wherein the control signal (A) is generated by a first microcontroller, and the fault-free function of the first microcontroller is checked by monitoring of the control signal (A) by a second microcontroller.

6. Method according to Claim 5, **characterized in that** the predefined distance is varied as a function of the velocity of the driverless vehicle (20).

7. Method according to Claim 5 or 6, **characterized in that** the changes from the first voltage (U1) to the second voltage (U2) and from the second voltage (U2) to the first voltage (U1) take place periodically after a first predetermined time period, in particular after 15 ms, wherein the second microcontroller monitors the time period between the changes, and sets the control signal (A) permanently to the first voltage (U1) when a second predetermined time period expires, in particular after 20 ms after a change of the voltage.

8. Method according to Claim 7, **characterized in that** the first microcontroller emits a voltage change after a predefined number of changes, in particular after five changes from the second voltage (U2) to the first voltage (U1), wherein the second microcontroller sets the control signal (A) for the first predetermined time period to the first voltage (U1) and subsequently again to the second voltage (U2) within a third predetermined time period, in particular 5 ms, wherein the first microcontroller monitors the voltage change of the control signal (A), which is generated by the second microcontroller, and when the control signal fails to take place, said first microcontroller sets the control signal (A) to the first voltage (U1) permanently.

9. Method according to one of Claims 5 to 8, **characterized in that** a time period between the emission of successive ultrasound signals (16.1) is varied by the first ultrasound transducer (1.1) within a predefined range.

10. Method according to Claim 9, **characterized in that** every time period between the emission of successive ultrasound signals (16.1) is calculated as a function of the amplitudes of a first predetermined number of modified components (16.2) which have been received previously by the second ultrasound transducer (1.1).

11. Method according to one of Claims 5 to 10, **characterized in that** the evaluation unit calculates the distance from an object on the basis of the ultrasound signals (16.1) received by the second ultrasound transducer (1.2), wherein only those received ultrasound signals (16.1) which are received by the second ultrasound transducer (1.2) when there is a second predetermined number of successive ultrasound signals (16.1) emitted from the first ultrasound transducer (1.1) after the same time period are used to determine the distance from the object.

12. Method according to one of Claims 5 to 11, **characterized in that** the first voltage (U1) is lower than the second voltage (U2), wherein the first voltage (U1) is, in particular 0 volt and the second voltage (U2) is, in particular, from 1 volt to 50 volts, preferably 24 volts.

## Revendications

1. Véhicule sans conducteur avec une unité de commande (27) et au moins un capteur à ultrasons (S) pour détecter des objets dans l'entourage du véhicule sans conducteur (20), en particulier dans le sens de la marche (F), dans lequel le capteur à ultrasons (S) comprend une unité d'évaluation ainsi que deux transducteurs d'ultrasons (1.1, 1.2) reliés du point de vue acoustique par une substance acoustique (2) qui sont constitués de telle sorte que des signaux à ultrasons peuvent être émis par un des deux transducteurs d'ultrasons (1.1, 1.2) et reçus par l'autre transducteur d'ultrasons (1.1, 1.2), dans lequel une partie (16.2) des signaux à ultrasons transmise depuis le premier transducteur d'ultrasons (1.1, 1.2) par la substance acoustique (2) au deuxième transducteur d'ultrasons (1.1, 1.2) est transformée par la substance acoustique (2) et l'unité d'évaluation est constituée de telle sorte que ces parties (16.2) transformées des signaux à ultrasons peuvent être identifiées en tant que signal de contrôle, dans lequel l'unité d'évaluation est en plus constituée de telle sorte qu'en fonction d'au moins un paramètre de la partie (16.2) transformée d'un signal à ultrasons, déterminé par l'unité d'évaluation, un signal de commande (A) est transmis à l'unité de commande (27), **caractérisé en ce que** l'unité d'évaluation dispose d'un premier microcontrôleur et d'un deuxième microcontrôleur, le premier microcontrôleur générant, à l'aide des signaux à ultrasons reçus par un des deux transducteurs d'ultrasons (1.1, 1.2), le signal de commande (A) pour l'unité de commande (27) du véhicule sans conducteur (20) et le deuxième microcontrôleur étant constitué de telle sorte que celui-ci surveille le fonctionnement correct du premier microcontrôleur à l'aide du signal de commande généré (A).

2. Véhicule sans conducteur selon la revendication 1 **caractérisé en ce que** le véhicule sans conducteur (20) dispose en complément d'au moins un analyseur à laser (23) qui détecte les obstacles se trouvant dans le sens de la marche (F).

3. Véhicule sans conducteur selon la revendication 2 **caractérisé en ce que** l'au moins un analyseur à laser (23) est disposé sur le véhicule de telle sorte que celui-ci balaie dans le sens horizontal l'espace se trouvant dans le sens de la marche (F) pour l'essentiel parallèlement à la surface du sol et l'au moins un capteur à ultrasons (S) est disposé sur le véhicule de telle sorte que celui-ci détecte pour l'essentiel dans le sens vertical à la surface du sol l'espace se trouvant dans le sens de la marche (F).

4. Véhicule sans conducteur selon l'une quelconque des revendications 1 à 3 **caractérisé en ce que** l'unité d'évaluation est constituée de telle sorte qu'un signal de commande (A) est transmis à l'unité de commande (27) qui conduit à l'arrêt du véhicule sans conducteur, si l'au moins un capteur à ultrasons (S) et/ou l'au moins un analyseur à laser (23) détecte un objet qui se trouve à l'intérieur d'une distance prédéfinie du véhicule sans conducteur (20), la distance prédéfinie pouvant être adaptée par l'unité de commande (27) en fonction de la vitesse de déplacement du véhicule sans conducteur (20).

5. Procédé de fonctionnement d'un véhicule sans conducteur (20), en particulier selon l'une quelconque des revendications 1 à 4, avec une unité de commande (27) et au moins un capteur à ultrasons (S) avec deux transducteurs d'ultrasons (1.1, 1.2) reliés du point de vue acoustique par une substance acoustique (2), comprenant les étapes suivantes :
a) émission d'un signal à ultrasons par un transducteur d'ultrasons (1.1, 1.2),
b) réception du signal à ultrasons par le deuxième transducteur d'ultrasons (1.1, 1.2) et traitement de celui-ci par une unité d'évaluation du capteur à ultrasons (S),
c) réception par le deuxième transducteur d'ultrasons (1.1, 1.2) d'une partie (16.2) du signal à ultrasons transformée par la substance acoustique et identification de celle-ci par l'unité d'évaluation,
d) détermination d'au moins un paramètre de la partie transformée (16.2) du signal à ultrasons reçu par l'unité d'évaluation,
e) transmission d'un signal de commande à l'unité de commande (27) en fonction d'au moins un paramètre de la partie transformée (16.2) d'un signal à ultrasons qui est déterminé par l'unité d'évaluation,
**caractérisé en ce que**
f) le signal de commande (A) comprend un signal électrique avec une première tension constante (U1), si les signaux à ultrasons reçus par le deuxième transducteur d'ultrasons (1.2) indiquent un objet à l'intérieur d'une distance prédéfinie du capteur à ultrasons (S) ou s'il y a un signal électrique variant en alternance de façon périodique entre la première tension (U1) et une deuxième tension (U2), si les signaux à ultrasons reçus par le deuxième transducteur d'ultrasons (1.2) n'indiquent aucun objet à l'intérieur d'une distance prédéfinie du capteur à ultrasons (S), le signal de commande (A) étant généré par un premier microcontrôleur et le fonctionnement sans défaut du premier microcontrôleur étant vérifié par un deuxième microcontrôleur par la surveillance du signal de commande (A).

6. Procédé selon la revendication 5 **caractérisé en ce que** la distance prédéfinie est modifiée en fonction de la vitesse de la marche du véhicule sans conducteur (20).

7. Procédé selon la revendication 5 ou 6 **caractérisé en ce que** les changements de la première tension (U1) à la deuxième tension (U2) ainsi que de la deuxième tension (U2) à la première tension (U1) ont lieu périodiquement au bout d'une première durée prédéterminée, en particulier au bout de 15 ms, dans lequel le deuxième microcontrôleur surveille la durée entre les changements et établit durablement le signal de commande (A) à la première tension (U1) en cas de dépassement d'une deuxième durée prédéterminée, en particulier au bout de 20 ms après un changement de la tension.

8. Procédé selon la revendication 7 **caractérisé en ce que** le premier microcontrôleur met un changement de tension après un nombre prédéfini de changements, en particulier après cinq changements de la deuxième tension (U2) à la première tension (U1), dans lequel le deuxième microcontrôleur établit au cours d'une troisième durée prédéterminée, en particulier 5 ms, le signal de commande (A) pour la première durée prédéterminée à la première tension (U1) et ensuite à nouveau à la deuxième tension (U2), dans lequel le premier microcontrôleur surveille le changement de tension du signal de commande (A) généré par le deuxième microcontrôleur et, en cas d'absence de celui-ci, établit durablement le signal de commande (A) à la première tension (U1).

9. Procédé selon l'une quelconque des revendications 5 à 8 **caractérisé en ce qu**'une durée entre les émissions de signaux à ultrasons successifs (16.1) est modifiée par le premier transducteur d'ultrasons (1.1) à l'intérieur d'une plage prédéfinie.

10. Procédé selon la revendication 9 **caractérisé en ce que** chaque durée entre les émissions de signaux à ultrasons successifs (16.1) est calculée en fonction des amplitudes d'un premier nombre prédéterminé de parties transformées (16.2), qui ont été reçues préalablement par le deuxième transducteur d'ultrasons (1.1).

11. Procédé selon l'une quelconque des revendications 5 à 10 **caractérisé en ce que** l'unité d'évaluation calcule la distance d'un objet à l'aide des signaux à ultrasons (16.1) reçus par le deuxième transducteur d'ultrasons (1.2), dans lequel les seuls signaux à ultrasons reçus (16.1) utilisés pour déterminer la distance de l'objet sont ceux qui sont reçus après la même durée par le deuxième transducteur d'ultrasons (1.2) avec un deuxième nombre prédéterminé de signaux à ultrasons (16.1) successifs, émis par le premier transducteur d'ultrasons (1.1).

12. Procédé selon l'une quelconque des revendications 5 à 11 **caractérisé en ce que** la première tension (U1) est plus faible que la deuxième tension (U2), la première tension (U1) étant en particulier de 0 volt et la deuxième tension (U2) en particulier de 1 volt à 50 volts, de préférence 24 volts.
